# EUROPÄISCHE PATENTSCHRIFT

(11) **EP 3 559 484 B1**
(45) Veröffentlichungstag und Bekanntmachung des Hinweises auf die Patenterteilung: **20.07.2022**
(21) Anmeldenummer: 17826238.2
(22) Anmeldetag: 21.12.2017
(51) Int. Cl.: F16B 13/00, F16B 25/00, F16B 37/12, E04C 5/10, F16B 5/06, E04G 23/02, E21D 21/00

(54) **SYSTEM ZUM FÜGEN ODER ARMIEREN VON BAUTEILEN**
SYSTEM FOR JOINING OR REINFORCING COMPONENTS
SYSTÈME D'ASSEMBLAGE OU DE BLINDAGE DE COMPOSANTS

(30) Priorität: 21.12.2016 DE 102016125201
(43) Veröffentlichungstag der Anmeldung: 30.10.2019
(73) Patentinhaber: Ludwig Hettich Holding GmbH & Co. KG, 78713 Schramberg-Sulgen (DE)
(72) Erfinder: HECK, Andreas, 78126 Königsfeld-Neuhausen (DE); HETTICH, Ulrich, 78713 Schramberg (DE); SCHWAB, Andreas, 72175 Dornhan (DE)
(74) Vertreter: Lucke, Andreas
(86) Internationale Anmeldenummer: PCT/EP2017/084230
(87) Internationale Veröffentlichungsnummer: WO 2018/115358

(56) Entgegenhaltungen:
- EP-A1- 1 072 802
- WO-A1-2014/044677
- DE-A1-102013 109 428
- DE-U1-202007 007 550
- FR-A1- 2 520 455

## Beschreibung

### GEBIET DER ERFINDUNG

Die vorliegende Erfindung betrifft das Fügen und Armieren von Bauteilen. Insbesondere betrifft sie das Fügen und Armieren von Bauteilen aus Beton.

### HINTERGRUND UND VERWANDTER STAND DER TECHNIK

Im Stand der Technik ist es bekannt, Bauteile aus Beton miteinander zu fügen. Beispielsweise ist es bekannt, ein bestehendes Betonbauwerk mit Ergänzungs-Betonbauteilen zu versehen. Ein Beispiel hierfür ist eine Brücke, an der Brückenkappen befestigt werden sollen. In der DE 10 2000 90074421 ist eine Brücke mit Brückenkappen gezeigt. Hierbei werden die Brückenkappen auf ihrer Oberseite und zum Teil auch seitlich mittels Schrauben verankert, die in vorher eingebrachte Durchbrüche eingesetzt werden. Die Schrauben können hierbei selbstschneidend ausgebildet sein.

Weiterhin ist es im Stand der Technik bekannt, Betonbauteile zu Armieren. Da Beton eine hohe Druckfestigkeit, aber nur eine geringe Zugfestigkeit hat, ist es üblich, Betonbauteile beispielsweise durch Bewehrungsstahlstäbe zu armieren, die geeignet sind, Zugkräfte aufzunehmen.

EP1 072 802 A1 Ankerbolzen mit zusätzlichen Gewindeschneid- und Bohrfunktionen und einem Werkzeug zur ausschließlichen Verwendung des Bolzens, wobei der Ankerbolzen eine Ankerstange und eine Ankerhülse mit einem an ihrer Spitze ausgebildeten Schlitz aufweist, wobei die Ankerstange nach oben gezogen wird, um den Spitzenteil der Ankerhülse aufzuweiten, um sie an einem Baukörper, wie z.B. Beton, zu befestigen, Gewinde an der äußeren Umfangsfläche der Ankerhülse ausgebildet sind und ein Eingriffsteil, das mit einem Installationswerkzeug in Eingriff steht, an den Basisendteilen sowohl der Ankerstange als auch der Ankerhülse vorgesehen ist. Sowohl die Ankerstange als auch die Ankerhülse werden durch das Einbauwerkzeug gedreht, so dass die auf der äußeren Umfangsfläche der Ankerhülse ausgebildeten Gewinde in die innere Umfangsfläche eines vorbereiteten Lochs in dem Baukörper geschraubt werden, während Innengewinde auf der inneren Umfangsfläche des vorbereiteten Lochs in dem Baukörper ausgebildet werden.

Eine Bohrklinge wird an der Spitze des Ankerbolzens befestigt, um einen selbst-bohrenden Ankerbolzen zu bilden. Das Installationswerkzeug ist in der Lage, den Ankerbolzen einzuschrauben und eine Befestigungsmutter anzuziehen, indem es nur dieses eine Werkzeug verwendet, und es auch zum Herausziehen des Ankerbolzens verwendet.

DE 20 2007 007 550 U1 offenbart ein Befestigungssystem zum Verbinden zweier Profilstäbe, wobei jeder der Profilstäbe an mindestens einer Außenseite eine parallel zur Stabachse verlaufende hinterschnittene Längsnut aufweist, wobei zumindest der erste Profilstab aus Metall besteht und mit dem zweiten Profilstab über einen Schraubverband befestigt ist, der eine Verbindungsschraube umfasst, welche einen Schraubenkopf aufweist, eine axiale Länge L1 ohne Schraubenkopf besitzt, durch eine Längsbohrung des lichten Innendurchmessers D2 eines mit einem Außengewinde in der Längsnut des ersten Profilstabes befestigten, im Wesentlichen zylindrischen ersten Widerlagerstückes mit axialer Länge L2 < L1 geführt und mit einer in der Längsnut des zweiten Profilstabes angeordneten Schraubenmutter in der Weise verschraubt ist, dass die Verbindungsschraube mit ihrem Schraubenkopf an das der Schraubenmutter abgewandte Ende des ersten Widerlagerstückes anschlägt. Das erste Widerlagerstück weist ein passend zum Außengewinde der Verbindungsschraube gewähltes Innengewinde mit axialer Länge l2 ≤ L2 und einem lichten Innendurchmesser d2 ≤ D2 auf, und die Verbindungsschraube weist zwischen ihrem Schraubenkopf und ihrem Außengewinde) einen gewindefreien Schaftabschnitt mit axialer Länge l1 > l2 und maximalem Außendurchmesser d1 < d2 auf.

FR 2 520 455 A1 offenbart eine Montagevorrichtung zum Zusammenfügen von zwei Elementen aus Verbundwerkstoffen, die es ermöglicht, Baugruppen von Strukturen aus Verbundwerkstoffen zu erhalten, die wasserdicht bleiben und die auf See in großen Tiefen untergetaucht bleiben können, ohne dass Wasser in das Verbundmaterial eindringt. Die Montagevorrichtung umfasst eine zylindrische Hülse mit Außengewinde, die in eine Gewindebohrung in einem der beiden Elemente eingeschraubt und eingeklebt ist und die ein blindes Innengewinde umfasst, in das eine Mutter eingeschraubt ist oder eine Schraube, die durch das zweite Element läuft.

WO 2014/044677 A1 beschreibt eine Gewindehülse zum Herstellen einer Provilverbindung, mit einem als selbstfurchendes, insbesondere ausschließlich materialumformendes oder spanabhebendes und selbstschneidendes Gewinde ausgebildetes Außengewinde, einer Durchgangsöffnung mit Innengewinde zur Aufnahme einer ein Schraubengewinde aufweisenden Verbindungsschraube sowie mit Antriebsmitteln, die sich zu beiden, voneinander abgewandten axialen Enden der Gewindehülse erstrecken. Dabei ist vorgesehen, dass eine Gewindesteigung des Außengewindes und eine Gewindesteigung des Innengewindes voneinander unterschiedlich sind.

DE 10 2013 109 428 A1 beschreibt ein Verankerungssystem mit einem Innengewindeanker und einem damit verschraubten Bolzen oder Schaft zur Halterung eines Anbauteils in einem in eine Wand aus Beton oder Mauerwerk vorgeborten Loch. Der Bolzen oder Schaft weist eine Schraubenfeder auf, die passend zu dem Innengewinde des Innengewindeankers gewickelt und in dieses Innengewinde eingeschraubt ist.

### ZUSAMMENFASSUNG DER ERFINDUNG

Der vorliegenden Erfindung liegt die Aufgabe zugrunde, ein verbessertes System zum Fügen von Bauteilen oder zum Armieren eines Bauteils anzugeben.

Diese Aufgabe wird durch ein System nach Anspruch 1 oder 2 sowie ein Verfahren nach Anspruch 8, 10, 12 oder 14 gelöst. Vorteilhafte Weiterbildungen sind in den abhängigen Ansprüchen angegeben. Das erfindungsgemäße System umfasst eine erste und eine zweite Gewindehülse, die jeweils folgendes umfassen:
- ein Außengewinde, mit dessen Hilfe die Gewindehülse in das jeweilige Bauteil einschraubbar ist, und die geeignet ist, mit dem jeweiligen Bauteil einen Verbund zu bilden, und
- einen Kraftantrieb, mit dem ein Drehmoment zum Einschrauben der Gewindehülse in das jeweilige Bauteil auf die Gewindehülse übertragbar ist.

Ferner umfasst das System ein längliches Spannelement, welches geeignet ist, durch die zweite Gewindehülse hindurchgeführt und in die erste Gewindehülse eingeführt oder durch diese durchgeführt zu werden, und das geeignet ist, die erste und die zweite Gewindehülse axial derart zu verspannen, dass die erste und die zweite Gewindehülse gegensinnige Verbundspannungen in dem jeweiligen Bauteil bilden. Weiterhin umfasst das System eine Furchspitze, die geeignet ist, ein Gewinde in das zugehörige Bauteil zu furchen, wobei die Furchspitze geeignet ist, ein Gewinde in Beton oder Mauerwerk zu Furchen, und wobei die Furchspitze einen Kraftantrieb umfasst, mit dem ein Drehmoment zum Einschrauben der Furchspitze in das jeweilige Bauteil auf die Furchspitze übertragbar ist. Dabei ist die Furchspitze als separate Komponente ausgebildet, die nicht Teil einer Gewindehülse ist.

In einer vereinfachten Ausführungsform des Systems kann die zweite Gewindehülse auch entfallen. Bei dieser vereinfachten Ausführungsform ist das längliche Spannelement dazu geeignet, durch ein Bohrloch im zu armierenden Bauteil bzw. in dem zweiten Bauteil von den zwei zu fügenden Bauteilen hindurchgeführt und an der ersten Gewindehülse festgelegt zu werden. In dieser vereinfachten Ausführungsform wird die erste Gewindehülse mit dem zu armierenden Bauteil bzw. mit dem zweiten Bauteil von zwei zu armierenden Bauteilen verspannt, beispielsweise indem ein Kopf am nachlaufenden Ende des länglichen Spannelements, oder eine auf ein Gewinde am nachlaufenden Ende des länglichen Spannelements vorgesehene Mutter gegen das zu armierende Bauteil bzw. das zweite Bauteil von zwei zu fügenden Bauteilen geschraubt wird. In diesem Fall tritt die oben genannte Verbundspannung nur im Bereich der ersten Gewindehülse auf. Alle weiteren unten beschriebenen, vorteilhaften Ausführungsformen beziehen sich, soweit sie nicht die zweite Gewindehülse betreffen, auch auf diese vereinfachte Variante, ohne dass im Folgenden gesondert darauf hingewiesen wird. Insbesondere kann auch diese vereinfachte Variante eine Furchspitze nach einer der unten beschriebenen Ausführungsformen und ein elastisches Element, insbesondere eine Zugfeder oder Druckfeder umfassen.

Man beachte, dass die Angabe, dass das Spannelement geeignet ist, durch die erste und gegebenenfalls zweite Gewindehülse hindurchgeführt zu werden, nicht bedeutet, dass die erste und (falls vorhanden) die zweite Gewindehülse zuerst in das Bohrloch eingebracht werden müssen, und das Spannelement nachträglich durch die Gewindehülse(n) geführt wird. Stattdessen ist es in bestimmten Ausführungsformen möglich, das längliche Spannelement zuerst in das Bohrloch einzubringen, und dann die Gewindehülse(n) auf das Spannelement aufzusetzen bzw. "aufzufädeln" und über das Spannelement hinweggleitend in das Bohrloch einzuschrauben, wobei das Spannelement, obwohl es selbst in Ruhe ist, gleichfalls durch die erste und gegebenenfalls zweite Gewindehülse hindurchgeführt wird.

Bei Verwendung des erfindungsgemäßen Systems lässt sich jeweils eine Gewindehülse auf jeder Seite einer Trennfuge in einem Bohrloch anordnen. Im Falle des Fügens von Bauteilen bezeichnet die "Trennfuge" in üblicher Weise die Grenze zwischen den aneinander anliegenden Bauteilen. Im Falle einer Armierung kann man sich die "Trennfuge" als hypothetischen Riss vorstellen, dessen Auftreten durch die Armierung verhindert werden soll. Durch das Spannelement werden die beiden Gewindehülsen axial verspannt, typischerweise auf Zug, sodass die Gewindehülsen über ihre jeweiligen Außengewinde eine gegensinnige Verbundspannung in dem jeweiligen Bauteil bilden. Diese Verbundspannung kann über die gesamte Länge, jedenfalls aber über einen erheblichen Teil der Länge der jeweiligen Gewindehülse erzeugt werden. Dadurch wird im Falle des Fügens die Last über einen vergleichsweise großen Abschnitt in das jeweilige Bauteil eingebracht, und es lässt sich eine gleichförmige Lastverteilung beiderseits der Trennfuge erreichen, wodurch die Stabilität der Verbindung erhöht wird.

Im Falle der Armierung erzeugt die Verbundspannung innerhalb des Bauteils eine Eigenspannungsverteilung, die Kräften, die unter Belastung des Bauteils auftreten können, entgegenwirken soll. Wenn es sich bei dem Bauteil um Beton handelt, kann das System beispielsweise das Entstehen eines Risses infolge einer Zuglast dadurch verhindern, dass das Bauteil mithilfe des Systems im Sinne einer Kompression vorgespannt wird, die der Zuglast entgegenwirkt. Der Unterschied zu einer herkömmlichen Armierung besteht darin, dass eine übliche Armierung, unabhängig davon, ob diese durch einen Bewehrungsstahl oder eine Betonschraube realisiert ist, erst dann ihre Wirkung entfaltet, wenn es zu einem Riss kommt. Eine übliche Armierung kann zwar eine Aufweitung eines solchen Risses verhindern, aber sie kann erst dann nennenswerte Kräfte aufnehmen, wenn es zu spürbaren Bewegungen im Bauteil kommt, d.h. wenn es beginnt zu reißen. Mit dem System der Erfindung hingegen wird die Verbundspannung bereits durch das vorgespannt System selbst, im vollständig intakten Bauteil erzeugt, sodass die Gewindegänge des Außengewindes der Hülsen schon Kräfte aufnehmen, bevor überhaupt ein Riss zu entstehen beginnt. Auf diese Weise kann eine wesentlich wirksamere Armierung erreicht werden, als im Stand der Technik bekannt ist.

Das System umfasst eine Furchspitze, die geeignet ist, ein Gewinde in das zugehörige Bauteil zu furchen, wobei die Furchspitze einen Kraftantrieb umfasst, mit dem ein Drehmoment zum Einschrauben der Furchspitze in das jeweilige Bauteil auf die Furchspitze übertragbar ist. Als "Furchspitze" wird in der vorliegenden Offenbarung eine Komponente mit einem Außengewinde oder zumindest einem frontalen bzw. vorlaufenden Außengewindeabschnitt verstanden, das bzw. der speziell zum Schneiden eines Gewindes im Bauteil geeignet ist. Beispielsweise kann dieser Gewindeabschnitt speziell gehärtet sein, und zusätzlich oder alternativ Zähne oder dergleichen aufweisen, die das Schneiden des Gewindes erleichtern. Die Furchspitze kann als separate Komponente ausgebildet sein, sie kann aber auch als frontaler Abschnitt der ersten Gewindehülse ausgebildet sein. Im Falle der oben genannten vereinfachten Ausführungsformen ist die Furchspitze als separate Komponente ausgebildet, die nicht Teil einer Gewindehülse ist. Die zweite Gewindehülse benötigt dann ihrerseits keine entsprechende Furchspitze, weil sie einfach in das durch die separate Furchspitze oder durch die Furchspitze als Teil der ersten Gewindehülse gefurchte Gewinde eingeschraubt werden kann.

Vorzugsweise besteht das zu armierende Bauteil oder bestehen die zu fügenden Bauteile aus Beton oder Mauerwerk. In der vorliegenden Offenbarung ist der Begriff "Beton" breit zu verstehen und gilt insbesondere als Oberbegriff für die zementgebundenen Verbundwerkstoffe Stahlbeton, Spannbeton, Faserbeton etc., aber auch für nicht zementgebundene Verbundwerkstoffe wie Mineralbeton, Porenbeton oder Kunstharzbeton, ohne auf diese beschränkt zu sein.

In einer vorteilhaften Ausführungsform wird das längliche Spannelement durch eine Schraube oder eine Gewindestange gebildet, die mindestens ein Außengewinde, insbesondere ein metrisches Außengewinde aufweist, wobei mindestens eine der Gewindehülsen oder die Furchspitze ein Innengewinde aufweist, in das die Schraube einschraubbar ist. Durch das Einschrauben des Gewindes der Schraube/Gewindestange in das Innengewinde der betreffenden Gewindehülse bzw. Furchspitze wird somit die Position der Gewindehülse direkt bzw. durch Schub durch die Furchspitze in Bezug auf die Schraube/Gewindestange verändert. Wenn dann die Schraube oder Gewindestange auf beliebige Art an der anderen Hülse festgelegt ist, können die beiden Hülsen auf diese Weise durch Drehen der Schraube bzw. Gewindestange axial verspannt werden.

Im Zusammenhang mit der vereinfachten Ausführungsform, die keine zweite Gewindehülse umfasst, kann die Schraube oder Gewindestange im Falle des Fügens am zweiten Bauteil festgelegt sein, beispielsweise indem ein Schraubenkopf an der der Trennfuge abgewandten Seite des zweiten Bauteils gegen das zweite Bauteil geschraubt wird, oder indem eine Mutter an der der Trennfuge abgewandten Seite gegen das zweite Bauteil geschraubt wird. Im Falle der Armierung mithilfe der vereinfachten Ausführungsform, die keine zweite Gewindehülse umfasst, kann die Schraube oder Gewindestange außen am zu armierenden Bauteil festgelegt sein, beispielsweise indem ein Schraubenkopf von außen gegen das Bauteil geschraubt wird, oder indem eine Mutter von außen gegen das zu armierende Bauteil geschraubt wird. Man beachte, dass die Angabe dass die Mutter bzw. der Schraubenkopf "gegen das Bauteil geschraubt wird" nicht notwendigerweise bedenkt, dass der Kopf bzw. die Mutter direkt am zweiten Bauteil anliegt. Stattdessen können weitere Komponenten, insbesondere eine Druckfeder, zwischen Schraubenkopf bzw. Mutter und dem Bauteil angeordnet sein.

Vorzugsweise ist das mindestens eine Außengewinde zumindest im Bereich des führenden Endes der Schraube oder Gewindestange ausgebildet, und weist die Furchspitze oder die erste Gewindehülse das genannte Innengewinde auf. Vorzugsweise ist das Innengewinde zumindest teilweise in einem führenden Abschnitt der ersten Gewindehülse ausgebildet.

In einer vorteilhaften Ausführungsform ist das längliche Spannelement durch eine Schraube mit einem Kopf gebildet, der geeignet ist, an einem nachlaufenden Ende der zweiten Gewindehülse direkt oder über ein dazwischenliegendes Element anzugreifen, um infolge des Einschraubens des mindestens einen Außengewindes der Schraube in das mindestens eine Innengewinde der ersten Gewindehülse die zweite Gewindehülse in Richtung auf die erste Gewindehülse zu spannen. Über diesen Schraubenkopf ist die Schraube somit im Sinne der obigen Beschreibung an der zweiten Gewindehülse "festgelegt". In einer verwandten vorteilhaften Ausführungsform ist das längliche Spannelement durch eine Gewindestange gebildet und umfasst das System weiterhin eine Mutter, die an einem nachlaufenden Ende der Gewindestange auf diese aufschraubbar ist, um an einem nachlaufenden Ende der zweiten Gewindehülse direkt oder über ein dazwischenliegendes Element anzugreifen und die zweite Gewindehülse in Richtung auf die erste Gewindehülse zu spannen. Es wird aber betont, dass die Erfindung nicht auf diese Ausführungen beschränkt ist, sondern eine Vielzahl anderer Varianten denkbar sind, die Schraube oder Gewindestange an einer der Gewindehülsen festzulegen.

Beispielsweise weist in einer alternativen Ausführungsform die erste Gewindehülse ein erstes Innengewinde und die zweite Gewindehülse ein zweites Innengewinde auf, wobei die Schraube oder Gewindestange ein erstes und ein zweites Außengewinde hat, die geeignet bemessen sind, um in das erste bzw. zweite Innengewinde eingeschraubt zu werden. Dabei ist der Innendurchmesser des zweiten Innengewindes größer ist als der Innendurchmesser des ersten Innengewindes, und die Steigung des ersten Innengewindes ist von der Steigung des zweiten Innengewindes verschieden, und insbesondere größer als die Steigerung des zweiten Innengewindes. Bei dieser Ausführungsform kann das erste Außengewinde der Schraube durch das zweite Innengewinde in der zweiten Gewindehülse durchgeführt und in das erste Innengewinde in der ersten Gewindehülse eingeschraubt werden. Dabei ist oder gerät das zweite Außengewinde der Schraube mit dem zweiten Innengewinde in der zweiten Gewindehülse in Eingriff. Wenn die Steigung des ersten Innengewindes größer ist als diejenige des zweiten Innengewindes, werden die beiden Gewindehülsen beim Einschrauben der Schraube aufeinander zubewegt und dadurch axial verspannt. Abweichend hiervon kann das erste Gewinde anstatt in der ersten Gewindehülse auch in der Furchspitze ausgebildet sein.

In einer vorteilhaften Weiterbildung umfasst das System ferner ein elastisches Element, insbesondere eine Zugfeder oder eine Druckfeder, welches durch Betätigung des Spannelementes vorgespannt werden kann und so mit der ersten Gewindehülse, der zweiten Gewindehülse und dem Spannelement in Wirkverbindung steht, dass die Vorspannung des elastischen Elementes zur axialen Verspannung der beiden Gewindehülsen beiträgt oder diese bewirkt. Im Falle der vereinfachten Ausführungsform ohne zweite Gewindehülse bewirkt das elastische Element eine axiale Verspannung der ersten Gewindehülse gegen das zweite Bauteil von zwei zu armierenden Bauteilen bzw. mit dem zu armierenden Bauteil. Mithilfe eines solchen elastischen Elementes kann das Ausmaß der Verspannung der Hülsen gegeneinander, und in Folge dessen die Verbundspannung in dem jeweiligen Bauteil vergleichsweise präzise eingestellt und vor allem beibehalten werden, selbst wenn das Bauteil, das Außengewinde der Gewindehülsen, das Spannelement und/oder der Verbund nach der Montage etwas nachgeben sollte. Beispielsweise ist zu erwarten, dass bei einfacher Verspannung ohne elastisches Element die Spannung im Verbund infolge der Duktilität des Gewindematerials nachlassen wird, weil bereits ein geringfügiges Nachgeben des Außengewindes der Gewindehülsen zu einer erheblichen Abnahme der Verbundspannung führen kann. Dies ist aber nicht der Fall, wenn die Vorspannung durch ein elastisches Element erzeugt wird, weil sich die Vorspannung durch das elastische Element praktisch nicht ändert, wenn die Gewindegänge geringfügig nachgeben.

Vorzugweise wird das elastische Element durch eine Druckfeder gebildet, die geeignet ist, zwischen dem Kopf der Schraube bzw. der Mutter und dem nachlaufenden Ende der zweiten Gewindehülse angeordnet zu werden, oder, im Falle der vereinfachten Ausführungsform ohne zweite Gewindehülse, zwischen dem Kopf der Schraube bzw. der Mutter und der der Trennfuge abgewandten Seite des zweiten Bauteils von zwei zu fügen den Bauteilen bzw. zwischen dem Kopf der Schraube bzw. der Mutter und der Außenseite des zu armierenden Bauteils angeordnet zu werden. Diese Variante gestattet eine einfache Montage und einen einfachen konstruktiven Aufbau.

In einer vorteilhaften Ausführungsform wird der Kraftantrieb einer oder beider Gewindehülsen durch ein Innenprofil oder einen Schlitz gebildet wird. Vorzugsweise wird der Kraftantrieb der Furchspitze durch ein Innenprofil gebildet.

In einer vorteilhaften Ausführungsform weist das Innenprofil einen geringeren Durchmesser auf als das Innengewinde und ist das Innenprofil näher am führenden Ende der Furchspitze angeordnet, als das Innengewinde. Dies bedeutet, dass ein zugehöriges Antriebswerkzeug einen geringeren Außendurchmesser haben wird, als der Durchmesser des Innengewindes, und somit problemlos durch das Innengewinde hindurch bis zum Innenprofil geführt werden kann. In einer alternativen Ausführungsform hat das Innenprofil einen größeren Durchmesser als das Innengewinde und ist das Innenprofil weiter vom führenden Ende der Furchspitze entfernt angeordnet, als das Innengewinde. In diesem Fall wird auch das Antriebswerkzeug einen größeren Durchmesser haben, als der Durchmesser des Innengewindes, sodass es nicht durch dieses hindurch geführt werden kann. Da aber in dieser Ausführungsform das Innenprofil weiter vom führenden Ende der Furchspitze entfernt angeordnet ist, muss das Antriebswerkzeug bei dieser Konstellation nicht durch das Innengewinde geführt werden, um mit dem Innenprofil in Eingriff gebracht zu werden.

In noch einer weiteren vorteilhaften Ausführungsform sind das Innenprofil und das Innengewinde zumindest abschnittsweise in demselben axialen Abschnitt der Furchspitze ausgebildet. In diesem Fall sind das Innengewinde und das Innenprofil überlagert, was unten anhand eines Ausführungsbeispieles näher veranschaulicht wird.

In einer vorteilhaften Ausführungsform erstreckt sich das Innenprofil über die gesamte Länge der jeweiligen Gewindehülse oder der Furchspitze. Diese Aufführungsform hat spezielle Vorteile im Hinblick auf die Fertigung, denn sie gestattet, dass die Hülse mit dem Innenprofil durch Ziehen aus einem Rohr mit Innenkontur hergestellt wird, wobei die Innenkontur dem Antriebs-Innenprofil entspricht.

In einer vorteilhaften Ausführungsform ist das Innenprofil als Innensechskant oder Innensechsrund ausgebildet.

Vorzugsweise weist das Innenprofil eine Mehrzahl von keilförmigen, als Keilnut oder als Kalotte ausgebildete Ausnehmungen zur Aufnahme eines Werkzeuges auf.

In einer vorteilhaften Ausführungsform besteht die erste und/oder die zweite Gewindehülse aus einem gezogenen Rohr mit Innenprofil, auf bzw. in dem das Außengewinde und/oder ein Innengewinde durch Umformung oder spanend, insbesondere durch Wälzschälen ausgebildet ist. Diese Ausführungsform gestattet eine vergleichsweise kostengünstige Herstellung und bietet zudem aufgrund der massiven Ausgestaltung eine hohe Stabilität.

In einer alternativen Ausführungsform ist die erste und/oder die zweite Gewindehülse gewickelt. Eine gewickelte Hülse lässt sich ebenfalls vergleichsweise kostengünstig herstellen.

In einem weiteren Aspekt betrifft die Erfindung ein Verfahren zum Armieren eines Bauteils unter Verwendung eines Systems nach einer der vorstehend beschriebenen Ausführungsformen. Dabei umfasst das Verfahren die folgenden Schritte:
Bohren eines Bohrloches in das zu armierende Bauteil,
Einschrauben der ersten Gewindehülse in das Bohrloch, sodass diese eine erste Position in dem Bauteil einnimmt,
Einschrauben der zweiten Gewindehülse in das Bohrloch, sodass diese eine zweite Position in dem Bauteil einnimmt,
Einführen des länglichen Spannelementes durch die zweite Gewindehülse hindurch und in oder durch die erste Gewindehülse und axiales Verspannen der ersten und der zweiten Gewindehülse derart, dass die erste und die zweite Gewindehülse gegensinnige Verbundspannungen in dem jeweiligen Bauteil bilden.

In diesem Verfahren kann das längliche Spannelement durch die zweite Gewindehülse hindurch und in oder durch die erste Gewindehülse geführt werden, nachdem die erste und die zweite Gewindehülse in das Bohrloch eingeschraubt wurden, und mit einem führenden Ende an der ersten Gewindehülse festgelegt werden. Alternativ ist es aber auch möglich, dass das längliche Spannelement zuerst in das Bohrloch eingeführt wird, und das längliche Spannelement durch die erste und die zweite Gewindehülse geführt wird, indem die erste und die zweite Gewindehülse auf das längliche Spannelement aufgefädelt und in das Bohrloch geschraubt werden, wobei ein führendes Ende des länglichen Spannelements an der ersten Gewindehülse festgelegt wird, indem die erste Gewindehülse an einem Anschlagselement am führenden Ende des länglichen Spannelements, insbesondere einem Schraubenkopf oder einer Mutter anstößt.

Wenn das Verfahren mit dem vereinfachten System ausgeführt wird, welches lediglich eine Gewindehülse umfasst, wird diese erste Gewindehülse in das Bohrloch eingeschraubt, sodass diese eine erste Position in dem Bauteil einnimmt, das längliche Spannelement vor oder nach dem Einschrauben der ersten Gewindehülse in das Bohrloch geführt, ein führendes Ende des länglichen Spannelementes an der ersten Gewindehülse festgelegt und die erste Gewindehülse mit dem Bauteil derart axial verspannt, dass die zweite Gewindehülse in Richtung auf den Eingang des Bohrlochs gespannt wird.

Vorzugsweise wird das Verfahren in einem Betonbauteil, insbesondere einer Betondecke ausgeführt. Besonders vorzugsweise wird das Armierungsverfahren in der Nähe von tragenden Säulen, Wänden, Unterzügen und Auflagern der Betondecke durchgeführt. Im Stand der Technik besteht ein großes Problem in der Festigkeit von Betondecken in der Nähe von tragenden Strukturen wie Säulen, Wänden, Unterzügen und Auflagern. Die Erfinder haben festgestellt, dass sich das erfindungsgemäße System zur Armierung ideal einsetzen lässt, um Risse in Betondecken in der Nähe von derartigen tragenden Strukturen zu vermeiden und die Tragfähigkeit des zu armierenden Bauteils zu erhöhen. Von entscheidender Bedeutung ist dabei, dass das System der Erfindung eine vorgespannte Armierung ermöglicht, die bereits Wirkung entfaltet, bevor Risse im Beton auftreten.

In den beigefügten Ansprüchen wird das Verfahren zum Armieren unter Verwendung des vereinfachten Systems konkret im Zusammenhang mit dem Armieren einer Betondecke unter Schutz gestellt, wobei die Armierung in der Nähe von tragenden Säulen, Wänden, Unterzügen oder Auflagern der Betondecke durchgeführt wird.

In einer vorteilhaften Ausführungsform wird die Höhe der Verbundspannung auf einen vorbestimmten Wert eingestellt, insbesondere durch Anwenden eines vorbestimmten Einschraub-Drehmoments einer das längliche Spannelement bildenden Schraube, oder durch kontrollierte Vorspannung des genannten elastischen Elementes. Geeignete Vorspannungen können, ebenso wie die geeignete Platzierung der Armierung, durch statische Untersuchungen oder Berechnungen mit der Finite-Elemente-Methode ermittelt werden.

In einer vorteilhaften Weiterbildung des Verfahrens wird die Höhe der Verbundspannung nach der Einbringung der Armierung kontrolliert, und gegebenenfalls nachgestellt, insbesondere in regelmäßigen Wartungsintervallen. Es ist ein wesentlicher Vorteil des erfindungsgemäßen Systems, dass die Verbundspannung in den jeweiligen Bauteilen durch Betätigung des Spannelements nachjustiert werden kann, um Veränderungen im Bauteil, oder in den Komponenten des Systems z. B. aufgrund der Duktilität des Materials entgegenzuwirken.

Wenn das Verfahren mit einem vereinfachten System ausgeführt wird, welches lediglich eine Gewindehülse umfasst, kann das längliche Spannelement an seinem führenden Ende ebenfalls ein Anschlagselement, insbesondere einen Schraubenkopf oder eine aufgeschraubte Mutter haben, und das längliche Spannelement kann zuerst in das Bohrloch eingeführt werden, die erste Gewindehülse auf das längliche Spannelement aufgefädelt und in das Bohrloch geschraubt werden, und das führende Ende des länglichen Spannelements kann an der ersten Gewindehülse festgelegt werden, indem die erste Gewindehülse an dem Anschlagselement am führenden Ende des länglichen Spannelements anstößt.

Ein weiterer Aspekt Erfindung betrifft ein Verfahren zum Fügen eines ersten und eines zweiten Bauteils aus Beton unter Verwendung eines Systems nach einer der vorstehend beschriebenen Ausführungsformen, mit den folgenden Schritten: Bohren eines Bohrloches in das erste und das zweite Bauteil, Einschrauben der ersten Gewindehülse in das Bohrloch, sodass diese eine Position im ersten Bauteil einnimmt, Einschrauben der zweiten Gewindehülse in das Bohrloch, sodass diese eine Position im zweiten Bauteil einnimmt, die von der ersten Position beabstandet ist, Einführen des länglichen Spannelementes durch die zweite Gewindehülse hindurch und in oder durch die erste Gewindehülse und axiales Verspannen der ersten und der zweiten Gewindehülse derart, dass die erste und die zweite Gewindehülse gegensinnige Verbundspannungen in dem jeweiligen Bauteil bilden.

In diesem Verfahren kann das längliche Spannelement, ebenso wie im Falle der Armierung, durch die zweite Gewindehülse hindurch und in oder durch die erste Gewindehülse geführt werden, nachdem die erste und die zweite Gewindehülse in das Bohrloch eingeschraubt wurden, und mit einem führenden Ende an der ersten Gewindehülse festgelegt werden. Alternativ ist aber auch hier möglich, dass das längliche Spannelement zuerst in das Bohrloch eingeführt wird, und das längliche Spannelement durch die erste und die zweite Gewindehülse geführt wird, indem die erste und die zweite Gewindehülse auf das längliche Spannelement aufgefädelt und in das Bohrloch geschraubt werden, wobei ein führendes Ende des länglichen Spannelements an der ersten Gewindehülse festgelegt wird, indem die erste Gewindehülse an einem Anschlagselement am führenden Ende des länglichen Spannelements, insbesondere einem Schraubenkopf oder einer Mutter anstößt.

Alternativ kann das Verfahren zum Fügen eines ersten und eines zweiten Bauteils aus Beton auch unter Verwendung eines vorstehend beschriebenen vereinfachten Systems durchgeführt werden, welches lediglich eine (erste) Gewindehülse umfasst. Ein solches Verfahren umfasst die folgenden Schritte: Bohren eines Bohrloches in das erste und das zweite Bauteil, Furchen eines Gewindes in dem Bohrloch mithilfe einer Furchspitze, die einen Kraftantrieb umfasst, auf den beim Einschrauben der Furchspitze ein Drehmoment übertragen wird, Einschrauben der ersten Gewindehülse in das Bohrloch, sodass diese eine Position im ersten Bauteil einnimmt, Einführen des länglichen Spannelementes in das Bohrloch vor oder nach dem Einschrauben der ersten Gewindehülse, Festlegen eines führenden Endes des länglichen Spannelementes an der ersten Gewindehülse und axiales Verspannen der ersten Gewindehülse mit dem zweiten Bauteil.

Eine bevorzugte Ausführungsform betrifft ein Verfahren zum Fügen eines ersten und eines zweiten Bauteils, wobei zumindest das erste Bauteil aus Beton ist, und wobei der Anschluss zwischen dem ersten und dem zweiten Bauteil im bestimmungsgemäßen Gebrauch sowohl eine Querbelastung Q als auch eine Zugbelastung N erfährt, wobei gilt Q/N ≥ 0,25, vorzugsweise Q/N ≥ 0,5 und besonders vorzugsweise Q/N ≥ 1. Wenn es sich beispielsweise bei den Bauteilen um Bauteile eines Bauwerks handelt, sind die Lasten im "bestimmungsgemäßen Gebrauch" die Lasten, die auf den Anschluss beim fertigestellten Bauwerk in der Praxis tatsächlich auftreten oder auftreten können, und die bei der Planung des Bauwerks berücksichtigt werden. In diesem Fall wird ein Bohrloch in das erste und das zweite Bauteil unter einem Winkel α von zwischen 20° und 80°, vorzugsweise zwischen 30° und 75° zur Trennfuge zwischen dem ersten und dem zweiten Bauteil eingebracht.

Bei herkömmlichen Verfahren zum Fügen von Bauelementen werden sekundär eingebrachte Verbindungselemente, also insbesondere Spannelemente im Sinne der vorliegenden Erfindung, immer senkrecht zur Bauteiloberfläche bzw. Trennfuge angeordnet. Insbesondere wird dies durch die gegenwärtig in der Bautechnik geltenden internationalen Regelungen für Verankerungssysteme in Beton manifestiert, die alle gemäß Vorschrift senkrecht zur Betonoberfläche zu verankern sind. Werden Anbauteile (entsprechend einem "zweiten Bauteil" im Sinne der vorliegende Erfindung) an Beton befestigt, müssen sowohl Zug-, als auch Querbelastungen sicher übertragen werden, wobei die Querbelastung zu einer hohen Biegebeanspruchung im Spannelement führen kann. Mit steigendem Abstand der Lasteinleitung in das Spannelement im Anbauteil (zweiten Bauteil) zur Trennfuge zwischen dem ersten und dem zweiten Bauteil steigt bei gleicher Lasteinwirkung auf das zweite Bauteil die Biegebeanspruchung. Typische Spannelemente im Sinne der vorliegende Erfindung, d.h. insbesondere Schrauben oder Gewindestangen, sind stabförmige, biegeweiche Verbindungsmittel und daher zu Übertragung von Querbelastungen nur bedingt geeignet. Um das Spannelement in einer Fügeverbindung von Bauteilen effektiv auszulasten, sollte es daher möglichst auf Zug belastet werden. Aus diesem Grund sieht das erfindungsgemäße Verfahren vor, dass für den Fall, dass neben einer Zugbelastung N senkrecht zur Trennfuge auch eine nennenswerte Querbelastung Q auftritt, die mindestens 25 %, vorzugsweise mindestens 50 % und besonders vorzugsweise 100% der Zugbelastung N beträgt, das Bohrloch nicht senkrecht zur Trennfuge ausgebildet wird, sondern um einen Winkel a, der gegenüber dem Bohrloch geneigt ist. Diese Neigungswinkel a liegen stets zwischen 20° und 80°, in bevorzugten Ausführungsformen zwischen 30° und 75°.

Der spezielle Neigungswinkel α ist dabei so gewählt, dass der Anteil der Zugbelastung im geneigt eingebrachten Spannelement zumindest größer ist als wenn dasselbe Spannelement bei derselben Belastung des Anschlusses senkrecht zur Trennfuge eingebracht wäre.

In einer vorteilhaften Weiterbildung umfasst der Schritt des Verspannens das Spannen einer Druckfeder, die zwischen dem zweiten Bauteil und dem Kopf oder der Mutter am nachlaufenden Ende des länglichen Spannelements angeordnet ist, oder dass Spannen einer dem Spannelement zugehörigen Zugfeder umfasst. Der Begriff "führendes" und "nachlaufendes Ende" bezieht sich auf die Orientierung beim Einsetzen des Spannelementes in das Bohrloch.

In einer vorteilhaften Weiterbildung wird das Verfahren unter Verwendung eines Systems nach einer der vorstehend beschriebenen Ausführungsformen durchgeführt. Ein derartiges System kann auch das oben genannte vereinfachte System umfassen, welches keine zweite Gewindehülse umfasst.

### KURZBESCHREIBUNG DER FIGUREN

- Fig. 1: zeigt eine Ansicht von zwei Bauteilen, die mit einem System nach einer Ausführungsform der Erfindung verbunden sind.
- Fig. 1a: zeigt dieselbe Ansicht wie in Fig. 1 im Querschnitt.
- Fig. 2: zeigt eine ähnliche Ansicht wie Fig. 1, bei der abweichend von Fig. 1 eine Druckfeder und eine Gewindestange zur Anwendung kommen.
- Fig. 3: zeigt eine Längsschnittsansicht, eine Draufsicht und eine perspektivische Ansicht einer Furchspitze.
- Fig. 4: zeigt eine Längsschnittsansicht, eine Draufsicht und eine perspektivische Ansicht einer Furchspitze in einer alternativen Ausführungsform.
- Fig. 5: zeigt eine Längsschnittsansicht, eine Draufsicht und eine perspektivische Ansicht einer Furchspitze in noch einer alternativen Ausführungsform.
- Fig. 6: zeigt eine Seitenansicht, eine Draufsicht und eine Längsschnittsansicht einer massiven Gewindehülse.
- Fig. 7: zeigt eine Seitenansicht, eine Draufsicht und eine Längsschnittsansicht einer gewickelten Gewindehülse.
- Fig. 8: zeigt eine Seitenansicht, eine Draufsicht und eine Längsansicht einer gewickelten Gewindehülse mit zur Längsachse geneigten Kontaktflächen.
- Fig. 9: zeigt vier perspektivische Ansichten einer Gewindehülse und eines Werkzeugs zum Wälzfräsen.
- Fig. 10: zeigt eine Ansicht von zwei Bauteilen, die mit einem System nach einer Ausführungsform der Erfindung verbunden sind, wobei das Bohrloch schräg geneigt zu einer Trennfuge zwischen den Bauteilen angeordnet ist.
- Fig. 11: zeigt Bestandteile einer Ausführungsform eines vereinfachten Systems, welches lediglich eine (erste) Gewindehülse umfasst.
- Fig. 12: zeigt Bestandteile einer Ausführungsform eines vereinfachten Systems mit lediglich einer (ersten) Gewindehülse, bei der das Spannelement durch eine Schraube gebildet wird, mit einem Schraubenkopf, der als Anschlagselement für die erste Gewindehülse dient.
- Fig. 13: zeigt Bestandteile einer Ausführungsform eines vereinfachten Systems mit lediglich einer (ersten) Gewindehülse, bei der das Spannelement durch eine Gewindestange gebildet wird, an deren führenden Ende eine Mutter aufgeschraubt ist, die als Anschlagselement für die erste Gewindehülse dient.

### BESCHREIBUNG DER BEVORZUGTEN AUSFÜHRUNGSFORMEN

Weitere Vorteile und Merkmale der Erfindung ergeben sich aus der folgenden Beschreibung, in der die Erfindung anhand eines Ausführungsbeispiels unter Bezugnahme auf die beigefügten Zeichnungen beschrieben wird.

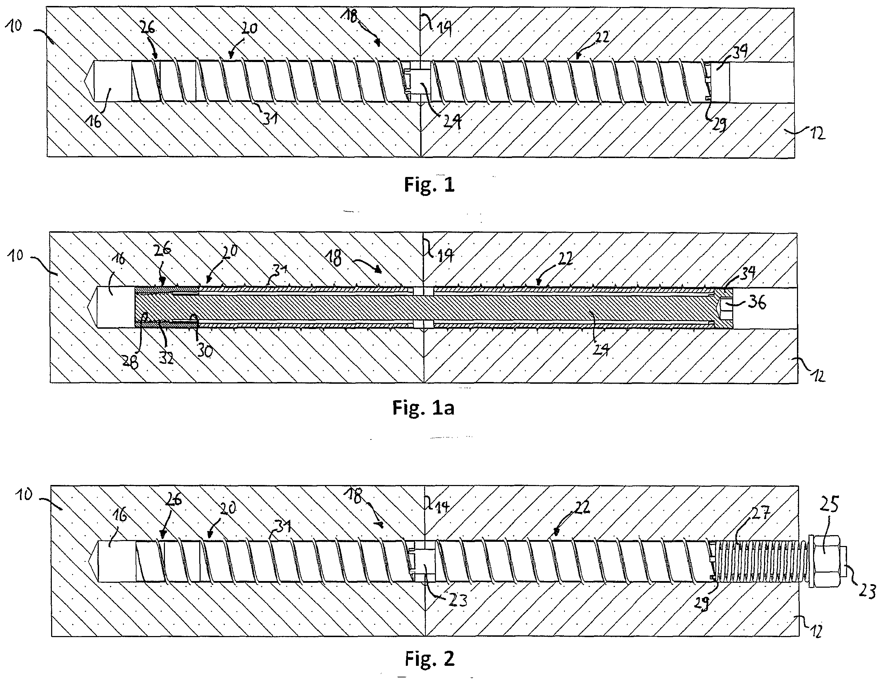

Fig. 1 zeigt ein erstes Bauteil 10 und ein zweites Bauteil 12 aus Beton, die an einer Trennfuge 14 aneinanderstoßen. Fig. 1a zeigt dieselbe Ansicht als Schnittdarstellung. Durch die beiden Bauteile 10 und 12 erstreckt sich ein Bohrloch 16, in dem ein System 18 angeordnet ist, welches zum Verbinden bzw. Fügen der beiden Bauteile 10, 12 bestimmt ist. Das System 18 umfasst eine erste Gewindehülse 20 und eine zweite Gewindehülse 22, sowie ein längliches Spannelement 24, das in der gezeigten Außenform durch eine Schraube gebildet wird. Dabei ist die erste Gewindehülse 20 im ersten Bauteil 10 und die zweite Gewindehülse 22 im zweiten Bauteil 12 angeordnet.

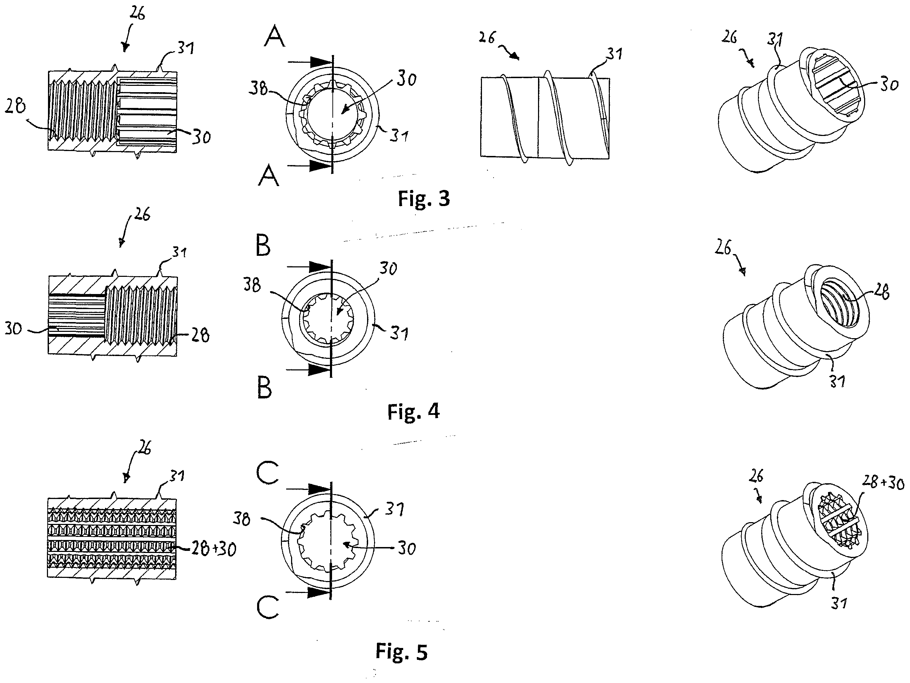

Das System 18 umfasst ferner eine Furchspitze 26, die im Bereich des führenden Endes der ersten Gewindehülse 20 angeordnet ist und die in Fig. 3 mehr im Detail gezeigt ist. In der gezeigten Ausführungsform ist die Furchspitze 26 eine separate Komponente, in anderen Ausführungsformen kann sie jedoch auch als Teil der ersten Gewindehülse 20 ausgebildet sein. Die Furchspitze 26 hat ein metrisches Innengewinde 28 und ein Innenprofil 30, welches einen Kraftantrieb bildet, mit dem ein Drehmoment zum Einschrauben der Furchspitze 26 in das erste Bauteil 10 auf die Furchspitze 26 übertragbar ist. Die erste und die zweite Gewindehülse 20, 22 verfügen ebenfalls über einen Kraftantrieb, der durch Schlitze 29 im nachlaufenden Ende der jeweiligen Gewindehülse 20, 22 gebildet ist. Ferner haben beide Gewindehülsen 20, 22 ein Außengewinde 31.

Die Schraube 24 hat an ihrem führenden Ende ein metrisches Außengewinde 32 und an ihrem nachlaufenden Ende einen Schraubenkopf 34, in dem ein Kraftantrieb 36 ausgebildet ist.

Als nächstes wird die Funktion des Systems 18 beschrieben: Um die Bauteile 10 und 12 miteinander zu verbinden, wird zunächst das Bohrloch 16 ausgebildet. Danach wird die Furchspitze 26 in das Bohrloch 16 eingeschraubt, und zwar durch das zweite Bauteil 12 hindurch bis in das erste Bauteil 10 hinein. Dazu wird ein Antriebswerkzeug (nicht gezeigt) verwendet, welches mit dem Innenprofil 30 in der Furchspitze 26 in Eingriff gebracht wird. Die Furchspitze 26 ist dazu geeignet, ein Gewinde in die Bauteile 10, 12 zu furchen. Als nächstes wird die erste Gewindehülse 20 in das Bohrloch 16 geschraubt, bis sie im ersten Bauteil 10 am nachlaufenden Ende der Furchspitze 26 anstößt. Schließlich wird die zweite Gewindehülse 22 in das Bohrloch eingeschraubt, verbleibt aber im zweiten Bauteil 12. Da durch die Furchspitze 26 bereits ein Gewinde in das Bohrloch 16 gefurcht ist, können die Gewindehülsen 20, 22 vergleichsweise leicht eingeschraubt werden.

Nachdem die beiden Gewindehülsen 20, 22 ihre in Figuren 1 und 1a gezeigten Positionen in dem ersten bzw. zweiten Bauteil 10, 12 eingenommen haben, wird die Schraube 14 durch die zweite Gewindehülse 22 und die erste Gewindehülse 20 hindurch in die Furchspitze 26 geführt und mit ihrem metrischen Außengewinde 32 in das metrische Innengewinde am führenden Ende der Furchspitze 26 geschraubt, bis der Kopf 34 der Schraube 14 am nachlaufenden Ende der zweiten Gewindehülse 22 anstößt, wie dies in Figuren 1 und 1a gezeigt ist. Durch weiteres Einschrauben der Schraube 14 werden die erste und die zweite Gewindehülse 20, 22 axial verspannt, wobei die Gewindehülsen 20, 22 über ihre Außengewinde 31 eine entsprechende gegensinnige Verbundspannung im Verbund mit den Bauteilen 10, 12 erzeugen. Man beachte, dass auch ein vereinfachtes System zur Anwendung kommen kann, welches die zweite Gewindehülse 22 nicht enthält. In diesem Fall wäre der Kopf 34 der Schraube 24 breiter ausgebildet, als das Bohrloch 16, und er würde sich an der der Trennfuge 14 abgewandten Seite des zweiten Bauteils 12 abstützen. Auf diese Weise können die Bauteile 10 und 12 ebenfalls miteinander verspannt werden. Der Vorteil dieser Ausführungsform liegt darin, dass auf die zusätzliche zweite Hülse 22 verzichtet werden kann. Anstatt über die Verbundspannung in der zweiten Hülse 22 wird die Kraft, mit der das erste das zweite Bauteil 10, 12 verspannt sind, in diesem Fall lediglich über den Kopf 34 der Schraube 14 aufgebracht.

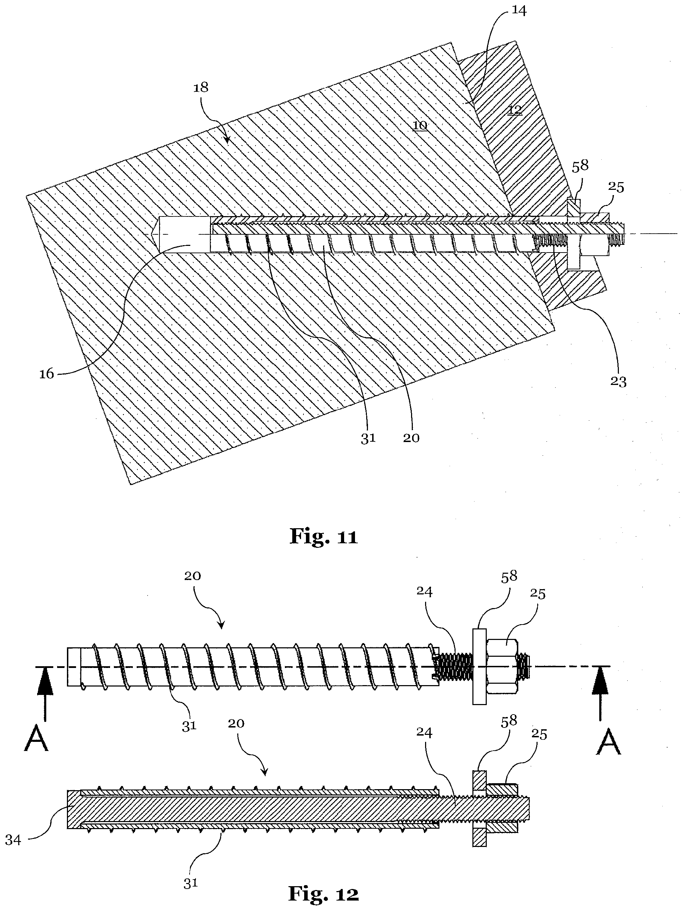

Diese Verbundspannung kann über die gesamte Länge, jedenfalls über einen erheblichen Teil der Länge der jeweiligen Gewindehülse 20, 22 erzeugt werden. Dadurch wird die aufgebrachte Vorspannung über einen vergleichweise großen Abschnitt in das jeweilige Bauteil 10,12 eingebracht. Zudem lässt sich eine gleichförmige Lastverteilung beiderseits der Trennfuge 14 erreichen, wodurch die Tragfähigkeit der Struktur erhöht wird. Idealerweise ist die jeweilige Länge der Gewindehülsen 20, 22 so zu wählen, dass die unter Belastung auftretenden Formänderungen beiderseits der Trennfuge näherungsweise gleich sind. Vorzugsweise sind die Lasteinleitungsflächen in den beiden zu verbindenden Bauteilen 10, 12 näherungsweise gleich, wodurch unter Last eine vergleichbare Formänderung auf beiden Seiten der Trennfuge 14 erreicht wird, was für die rechnerische Vorwegnahme der relativen Bauteilbewegungen vorteilhaft ist. Diese Wirkungsweise ist grundsätzlich unabhängig von der Ausrichtung innerhalb der zu fügenden Bauteile, zumindest solange es sich um einen homogenen Werkstoff handelt. Eine Ausnahme hiervon bildet der Werkstoff Holz, der aufgrund seiner Faserrichtung ein anisotropes Verhalten zeigt. Das System 18 und seine Verwendung sind nicht auf Anwendungen beschränkt, bei denen das Bohrloch 16 wie in Figuren 1, 1a und 2 gezeigt senkrecht zur Trennfuge 14 zwischen den Bauteilen 10, 12 verläuft. Stattdessen sind auch Anwendungen vorgesehen, bei denen das System 18 unter einem Winkel zur Trennfuge 14 eingesetzt wird, wie unten unter Bezugnahme Fig. 11 näher erläutert wird.

Obwohl in Fig. 1 und 1a das Fügen von zwei Bauteilen 10 und 12 gezeigt ist, lässt sich anhand der Figuren auch verstehen, wie das System 18 zur Armierung eines Bauteils eingesetzt werden kann. Dabei stelle man sich vor, dass das Bezugszeichen 14 anstelle einer Trennfuge eine Position markiert, an der unter Zugbelastung des Bauteils ein Riss im Bauteil auftreten könnte, der durch die Armierung verhindert werden soll. Mit anderen Worten wird im Falle der Armierung die Position des Systems 18 so gewählt, dass es quer zu befürchtenden Rissen angeordnet ist. Das System 18 erzeugt durch die Verbundspannung innerhalb des Bauteils eine Eigenspannungsverteilung, die Zugkräften, die zu einem Riss 14 führen könnten, entgegenwirkt. Konkret wird der Entstehung eines Risses 14 infolge einer Zuglast dadurch entgegengewirkt, dass das Bauteil mithilfe des Systems 18 im Bereich um den befürchteten Riss 14 komprimiert wird, und somit einer externen Zuglast, die möglicherweise den Riss 14 verursachen könnte, entgegenwirkt wird. Ein wesentlicher Unterschied zu einer herkömmlichen "schlaffen" Armierung besteht darin, dass eine übliche Armierung erst dann ihre Wirkung entfaltet, wenn es zu einem Riss kommt, weil die Armierung überhaupt erst dann nennenswerte Kräfte auf das Bauteil ausüben kann. Mit dem System 18 der Erfindung hingegen wird die Verbundspannung bereits durch das vorgespannte System 18 selbst im vollständig intakten Bauteil erzeugt, sodass die Gewindegänge des Außengewindes 31 der Hülsen 20, 22 schon Kräfte aufnehmen, bevor ein Riss 14 überhaupt zu entstehen beginnt. Auch für die Zwecke der Armierung kann ein vereinfachtes System mit lediglich einer (ersten) Gewindehülse Anwendung finden. Diese einzige Gewindehülse kann dann auch länger ausgebildet sein, als dies in Fig. 1 gezeigt ist, und sich insbesondere über den befürchteten Riss 14 hinweg erstrecken.

Fig. 2 zeigt eine ähnliche Ansicht wie Fig. 1, bei der jedoch anstelle einer Schraube 24 eine Gewindestange 23 verwendet wird, auf die eine Mutter 25 aufgeschraubt wird, um die erste und die zweite Gewindehülse 20, 22 gegeneinander zu verspannen. Zwischen der Mutter 25 und dem nachlaufenden Ende der zweiten Gewindehülse 22 ist in dieser Ausführungsform eine Druckfeder 27 angeordnet, die durch das Aufschrauben der Mutter 25 auf die Gewindestange 23 mit einer vorbestimmten Kraft vorgespannt wird. Dadurch wird gewährleistet, dass die Spannung selbst dann aufrechterhalten bleibt, wenn das Außengewinde 31 der Furchspitze 26 bzw. der ersten und der zweiten Gewindehülse 20, 22 unter Belastung, beispielsweise infolge der Duktilität des Materials, etwas nachgibt.

Fig. 3 zeigt eine Längsschnittsansicht, eine Draufsicht, eine Seitenansicht und eine perspektivische Ansicht der Furchspitze 26. Wie darin zu sehen ist, fällt die Höhe des Gewindegangs des Außengewindes 31 innerhalb der letzten etwa eineinhalb Umdrehungen in Richtung auf das führende Ende auf null ab, um das Eindrehen zu erleichtern. In diesem Bereich ist das Gewinde 31 speziell gehärtet. Obwohl dies in der Darstellung nicht gezeigt ist, kann das Gewinde im Bereich der Furchspitze 26 Zähne aufweisen, die die Schneidwirkung erhöhen und das Eindrehen und Furchen weiter erleichtern. Zudem ist der Kern der Furchspitze 26 an seinem vorderen Ende leicht konisch ausgebildet. Wie besonders der Längsschnittsansicht zu entnehmen ist, befindet sich bei der Furchspitze 26 von Fig. 3 das metrische Innengewinde 28 am führenden Ende der Furchspitze 26. Auf der dem führenden Ende abgewandten Seite schließt das Innenprofil 30 an, welches in der gezeigten Ausführungsform eine Sternform hat, mit einer Vielzahl von nach radial außen weisenden keilförmigen Ausnehmungen 38, in die ein zugehöriges Werkzeug (nicht gezeigt) eingreifen kann, um ein Drehmoment auf die Furchspitze 26 und dadurch auf die Gewindehülse 20 als Ganzes auszuüben. Man beachte, dass der Durchmesser des Innenprofils 30 ausreichend groß ist, dass die Schraube 24 ungehindert durch das Innenprofil 30 hindurchgeführt werden kann, um dann mit ihrem metrischen Außengewinde 32 in das metrische Innengewinde 28 der Furchspitze 26 eingeschraubt zu werden.

In Fig. 4 ist eine alternative Ausführungsform gezeigt, bei der die Anordnung des metrischen Innengewindes 28 und des Innenprofils 30 vertauscht sind, d.h. in dieser Ausführungsform befindet sich das Innenprofil 30 am führenden Ende der Furchspitze 28, und das Innengewinde 28 schließt auf der dem führende Ende abgewandten Seite daran an. In dieser Ausführungsform ist der Innendurchmesser des metrischen Innengewindes 28 größer als der Innendurchmesser des Innenprofils 30, damit ein Antriebswerkzeug (nicht gezeigt) ungehindert durch das Innengewinde 28 hindurchgeführt werden kann, um über das Innenprofil 30 ein Drehmoment auszuüben. Welche der beiden Ausführungen gewählt wird, hängt von praktischen Erwägungen und dem Anwendungsfall ab. Die Ausführungsform von Fig. 3 gestattet bei sonst gleichen Abmessungen die Verwendung eines Antriebswerkzeugs mit größerem Durchmesser, sodass höhere Drehmomente ausgeübt werden können. Die Ausführungsform von Fig. 4 gestattet bei sonst gleichen Abmessungen eine stärkere Wanddicke der Furchspitze 26, was eine höhere Stabilität verspricht.

Schließlich zeigt Fig. 5 eine Ausführungsform, bei der das Innenprofil 30 und das metrische Innengewinde 28 in demselben axialen Abschnitt innerhalb der Furchspitze 26 ausgebildet sind. Hier sind also das Innenprofil 30 und das Innengewinde 28 überlagert. Diese Ausführungsform kann insbesondere im Hinblick auf die Fertigung von Bedeutung sein, nämlich wenn die Furchspitze 26 oder die Gewindehülse 20, 22 aus einem gezogenen Rohr mit Innenprofil 30 hergestellt werden soll, welches sich dann notwendigerweise über die gesamte Länge der Furchspitze 26 bzw. der Gewindehülse 20, 22 erstreckt. Bei geeigneter Bemessung, wie sie in Fig. 5 gezeigt ist, kann zusätzlich das Innengewinde 28 in das Innenprofil 30 geschnitten werden, in welches die Schraube 24 mit ihrem metrischen Außengewinde 32 eingeschraubt werden kann.

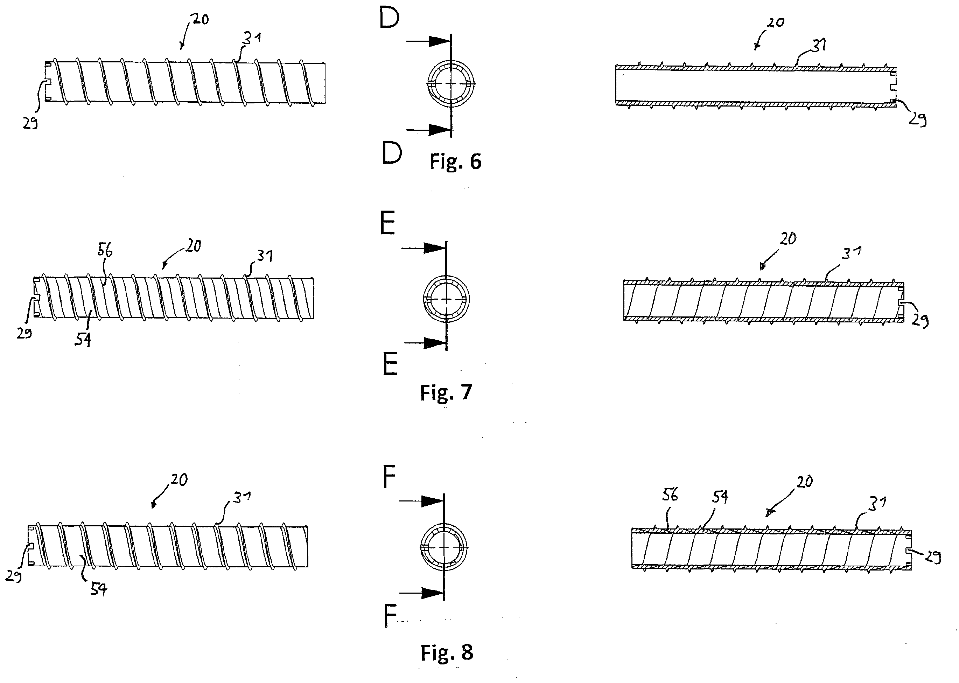

Fig. 6 zeigt eine Ausführungsform einer "massiven" Gewindehülse 20, d.h. einer Gewindehülse 20, die als durchgängiges Rohr gefertigt ist. Diese Ausführungsform zeichnet sich durch besondere Stabilität aus. Vorzugsweise wird die Gewindehülse 20 aus einem gezogenen Rohr mit einer Innenkontur hergestellt, die dem Innenprofil 30 (in Fig. 6 nicht gezeigt) entspricht. Das Außengewinde 31 kann dann durch Umformung, insbesondere durch "Furchen" hergestellt werden. Alternativ ist es aber auch möglich, das Außengewinde 31 durch Spanen, insbesondere durch Wälzschälen auszubilden. Falls das Innengewinde 28 in der Gewindehülse 20 ausgebildet ist (in der Fig. nicht gezeigt), kann auch dieses durch Umformung oder spanende Verfahren hergestellt werden.

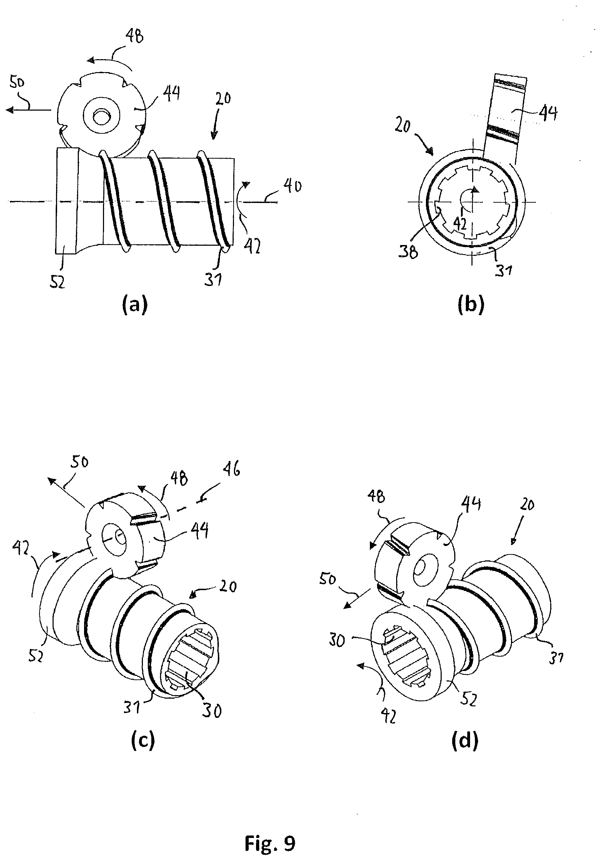

Fig. 9 zeigt vier perspektivische Ansichten zur Illustration eines Wälzschälprozesses. Darin ist eine Gewindehülse 20 gezeigt, die um ihre Längsachse 40 gedreht wird, wobei die Richtung der Drehung durch den Pfeil 42 angezeigt ist. Ferner ist in Fig. 9 ein Werkzeug 44 gezeigt, welches sich um eine Werkzeugachse 46 (s. Fig. 9c) dreht (s. Pfeil 48) und außerdem in Richtung des Pfeils 50 parallel zur Hülsenachse 40 bewegt wird. Bezugszeichen 52 kennzeichnet den Bereich, in dem das Material noch nicht durch das Werkzeug 44 abgeschält ist.

Durch das Wälzschälen lässt sich das Außengewinde 30 der Hülse 20 vergleichsweise schnell und kostengünstig herstellen.

Fig. 7 zeigt eine Alternative Ausführungsform einer Gewindehülse 20, bei der die Hülse 20 aus einem Band 54 gewickelt ist. Das Band ist dicht gewickelt, sodass die Ränder des Bandes 54 an Kontaktflächen 56 aneinander stoßen und sich eine geschlossene Hülse 20 ergibt. Wie insbesondere der Längsschnittsansicht zu entnehmen ist sind diese Kontaktflächen 56 im Wesentlichen senkrecht zur Längsachse der Hülse 20 angeordnet. Der Gewindegang des Außengewindes 31 kann vor dem Wickeln auf dem Band beispielsweise durch Walzen ausgebildet werden. Auch das metrische Innengewinde 28 (in Fig. 7 nicht gezeigt) kann vor dem Wickeln auf der anderen Seite des Bandes 54 ausgebildet werden. Eine derartige gewickelte Gewindehülse 20 lässt sich vergleichsweise kostengünstig herstellen.

Schließlich zeigt Fig. 8 eine abgewandelte Form der gewickelten Gewindehülse 20, die sich von der Ausführungsform von Fig. 7 darin unterscheidet, dass die Kontaktflächen 56 nicht mehr im Wesentlichen senkrecht zur Längsachse der Hülse 20 stehen, sondern zur Längsachse um einen Winkel geneigt sind, der mehr als 10°, vorzugsweise mehr als 25° und besonders vorzugsweise mehr als 45° beträgt. Dies hat zur Folge, dass die Gewindehülse 22 sich unter starkem axialen Zug aufspreizen kann, indem die Kontaktflächen 56 infolge einer zugbedingten Stauchung aneinander entlanggleiten. Dadurch kann die Verankerungswirkung speziell in gerissenem Beton verstärkt werden.

Man beachte, dass die Gewindehülsen 20, 22 in der vorliegenden Beschreibung und in den beigefügten Ansprüchen nur als Teil des Systems 18 der Erfindung offenbart sind. Gleichwohl können die hier beschriebenen und beanspruchten Gewindehülsen 20, 22 auch außerhalb des Systems 18 verwendet werden und haben somit eigenständige Bedeutung und erfinderische Qualität. Die Gewindehülsen 20, 22 könnten beispielsweise mit einem Innengewinde, insbesondere metrischen Innengewinde 28 versehen sein, welches sich über die gesamte oder den überwiegenden Teil ihrer Länge erstreckt, und zur Befestigung von Komponenten mithilfe einer Schraube dient.

Speziell die massive Gewindehülse, wie sie in Fig. 6 gezeigt ist, kann aus C-Stahl oder nichtrostendem Stahl gefertigt sein. Das Innenprofil 30, welches der Kraftantriebsübertragung des Einschraub-Drehmoments dient, kann sich über einen Teil oder über die gesamte Länge der Innenkontur erstrecken. Schließlich können die Gewindehülsen 20, 22 je nach Einsatzzweck mindestens partiell wärmebehandelt werden, insbesondere im Bereich des führenden Endes bzw. der Furchspitze 26.

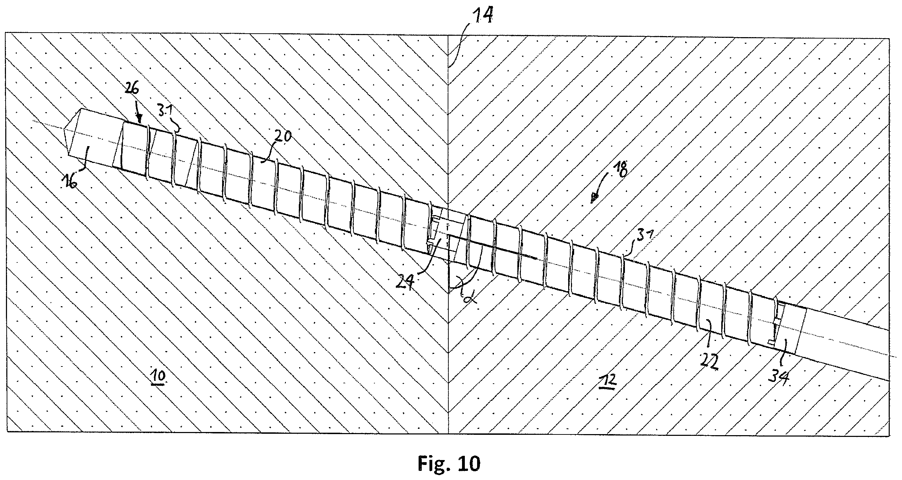

Während in Figuren 1,1a und 2 das System 18 senkrecht zu Trennfuge 14 ausgerichtet ist, sehen bevorzugte Verwendungen des Systems 18 und bevorzugte Verfahren zum Fügen von Bauteilen 10, 12 vor, das System 18 in einem Winkel α zu Trennfuge 14 anzuordnen, der von 90° verschieden ist. Dies ist beispielhaft in Fig. 10 gezeigt. Dieser Winkel α kann beispielsweise zwischen 20° und 80°, vorzugsweise zwischen 30° und 75° betragen. Eine nicht-senkrechte Anordnung ist insbesondere dann vorteilhaft, wenn die Bauteilbelastung parallel zur Trennfuge 14 wenigstens so groß wie die Belastung senkrecht zur Trennfuge 14 ist. Bei derartigen Lastkollektiven würde ein senkrecht zu Trennfuge 14 angeordnetes System 18 sehr stark auf Biegung belastet. Ein geneigtes System, d.h. ein System, bei dem α von 90° verschieden ist, kann unter diesen Umständen auf Zug beansprucht werden, mit einem deutlich höheren Versagenswiderstand im Vergleich zu dem Versagenswiderstand auf Biegung.

Fig. 11 zeigt eine teilweise geschnittene Ansicht von Bestandteilen eines vereinfachten Systems, welches wie in der Fig. gezeigt zum Fügen von einem ersten einem zweiten Bauteil 10, 12 verwendet werden kann, aber auch zum Zwecke der Armierung (nicht gezeigt) eingesetzt werden kann. Die zum erfindungsgemäßen System gehörige Furchspitze ist in Fig. 11 bis 13 nicht gezeigt. Der wesentliche Unterschied dieses Systems 18 zu den vorstehend beschriebenen Systemen besteht darin, dass das System 18 lediglich eine (erste) Gewindehülse 20 umfasst. Diese erste Gewindehülse 20 ist in diesem Ausführungsbeispiel länger ausgebildet als die erste Gewindehülse 20 in den vorstehend beschriebenen Systemen 18, die jeweils zwei Gewindehülsen 20, 22 enthielten, dies ist aber nicht notwendigerweise der Fall. Die Gewindehülse 20 hat ein Innengewinde, in welches eine Gewindestange 23 eingeschraubt ist. Auf die Gewindestange 23 ist eine Unterlegscheibe 58 aufgesetzt, die mithilfe einer Mutter gegen das zweite Bauteil 12 gespannt ist. Auf diese Weise wird die Gewindehülse 20 mit dem zweiten Bauteil 12 verspannt. Man beachte, dass auch in der Darstellung von Fig. 11 das Bohrloch 16 unter einem Winkel zu der Trennfuge 14 zwischen dem ersten und dem zweiten Bauteil 10, 12 gesetzt ist, der von 90° abweicht.

Figur 12 zeigt eine Seitenansicht und eine Schnittansicht von Bestandteilen eines vereinfachten Systems, welches lediglich eine (erste) Gewindehülse 20 umfasst. Bei diesem System wird das Spannelement 24 durch eine Schraube mit einem Schraubenkopf 34 gebildet, der aber in diesem Fall das führende Ende beim Einführen in das Bohrloch 16 bildet. Dieses System wird so montiert, dass zuerst das Spannelement 24 mit dem Kopf 34 voraus in das Bohrloch eingeführt wird, und nachfolgend die Gewindehülse 20 über den Schaft der Schraube geführt (bzw. auf den Schaft "aufgefädelt") und in das Bauteil (in Figur 12 nicht gezeigt) eingeschraubt wird. Der Schraubenkopf 34 bildet dabei ein Anschlagselement für die erste Gewindehülse 20. Wenn nämlich das Spannelement 24 durch Festziehen der Mutter 25 am nachlaufenden Ende gegen das zu armierende Bauteil 10, oder - im Falle des Fügens - gegen das zweite Bauteil 12 in Richtung auf den Eingang des Bohrloch 16 gespannt wird, stößt die Gewindehülse 20 am Kopf 34 an und wird in Richtung auf den Eingang des Bohrloch (das heißt in der Darstellung von Figur 12 nach rechts) gespannt. Der Vorteil dieser Ausführungsform liegt darin, dass das Spannelement 24 an der ersten Gewindehülse 20 festgelegt werden kann, ohne dass ein Innengewinde darin aus gebildet werden müsste. Dadurch wird die Herstellung der Gewindehülse 20 wesentlich vereinfacht.

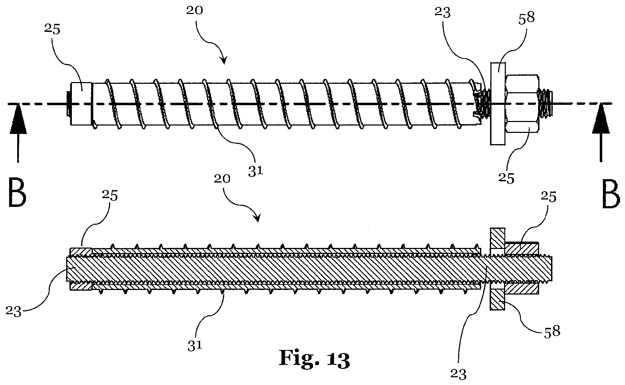

Man beachte, dass das Anschlagselement am führenden Ende des Spannelements 24 auf beliebige Weise gebildet werden kann, wobei der Schraubenkopf 34 nur ein Beispiel darstellt. Eine Alternative ist in Figur 13 gezeigt, bei der das Spannelement 24 durch eine Gewindestange 23 gebildet wird, an dessen führenden Ende eine Mutter 25 als Anschlagselement aufgeschraubt ist.

Es wird darauf hingewiesen, dass die zuvor beschriebenen Ausführungsformen als rein beispielhaft und die Erfindung nicht einschränkend anzusehen sind.

### Bezugszeichen

- 10: erstes Bauteil
- 12: zweites Bauteil
- 14: Trennfuge/Position eines befürchteten Risses
- 16: Bohrloch
- 18: System zum Fügen oder Armieren von Bauteilen
- 20: erste Gewindehülse
- 22: zweite Gewindehülse
- 23: Gewindestange
- 24: Schraube
- 25: Mutter
- 26: Furchspitze
- 27: Druckfeder
- 28: metrisches Innengewinde
- 29: Schlitz (Kraftantrieb)
- 30: Innenprofil (Kraftantrieb)
- 31: Außengewinde
- 32: metrisches Außengewinde der Schraube 24
- 34: Schraubenkopf
- 36: Kraftangriff der Schraube 24
- 38: Ausnehmung im Innenprofil 30
- 40: Längsachse der Gewindehülse 20
- 42: Drehrichtung der Gewindehülse 20
- 44: Werkzeug zum Wälzschälen
- 46: Achse des Werkzeugs 44
- 48: Drehrichtung des Werkzeugs 44
- 50: Richtung der Translationsbewegung des Werkzeugs 44
- 52: angedeutete Außenform des Rohlings zur Fertigung der Gewindehülse 20
- 54: Band zum Wickeln einer Gewindehülse 20
- 56: Kontaktfläche zwischen benachbarten Windungen des Bandes 54

## Patentansprüche

1. System (18) zum Fügen von zwei Bauteilen (10, 12), oder zum Armieren eines Bauteils, das eine erste und eine zweite Gewindehülse (20, 22) umfasst, die jeweils folgendes umfassen:
- ein Außengewinde (31), mit dessen Hilfe die Gewindehülse (20, 22) in das jeweilige Bauteil (10, 12) einschraubbar ist, wobei die Gewindehülse (20,22) geeignet ist, mit dem jeweiligen Bauteil (10, 12) einen Verbund zu bilden, und
- einen Kraftantrieb, mit dem ein Drehmoment zum Einschrauben der Gewindehülse (20, 22) in das jeweilige Bauteil auf die Gewindehülse übertragbar ist,
wobei das System (18) ferner ein längliches Spannelement (24) umfasst, welches geeignet ist, durch die zweite Gewindehülse (22) hindurchgeführt und in die erste Gewindehülse (20) eingeführt oder durch diese durchgeführt zu werden, und das geeignet ist, die erste und die zweite Gewindehülse (20, 22) axial derart zu verspannen, dass die erste und die zweite Gewindehülse (20, 22) gegensinnige Verbundspannungen in dem jeweiligen Bauteil (10, 12) bilden, wobei das System ferner eine Furchspitze (26) umfasst, die geeignet ist, ein Gewinde in das zugehörige Bauteil (10) zu furchen, wobei die Furchspitze (26) geeignet ist, ein Gewinde in Beton oder Mauerwerk zu furchen, wobei die Furchspitze (26) einen Kraftantrieb (30) umfasst, mit dem ein Drehmoment zum Einschrauben der Furchspitze (26) in das jeweilige Bauteil auf die Furchspitze (26) übertragbar ist, wobei die Furchspitze (26) als separate Komponente ausgebildet ist, die nicht Teil einer Gewindehülse (20,22) ist.

2. System (18) zum Fügen von zwei Bauteilen (10, 12), oder zum Armieren eines Bauteils, das eine erste Gewindehülse (20) umfasst, die folgendes umfasst:
- ein Außengewinde (31), mit dessen Hilfe die Gewindehülse (20) in das erste Bauteil (10) einschraubbar ist, wobei die Gewindehülse (20) geeignet ist, mit dem ersten Bauteil (10) einen Verbund zu bilden, und
- einen Kraftantrieb, mit dem ein Drehmoment zum Einschrauben der Gewindehülse (20) in das erste Bauteil (10) auf die Gewindehülse (20) übertragbar ist,
wobei das System (18) ferner ein längliches Spannelement (24) umfasst, welches geeignet ist, durch eine Bohrung (16) in dem zu armierenden Bauteil bzw. in dem zweiten Bauteil (12) von den zwei zu fügenden Bauteilen (10,12) hindurchgeführt und in die erste Gewindehülse (20) eingeführt oder durch diese durchgeführt zu werden, und das geeignet ist, die erste Gewindehülse (20) mit dem zu armierenden Bauteil bzw. mit dem zweiten Bauteil (12) von zwei zu fügenden Bauteilen (10, 12) axial zu verspannen, wobei das System ferner eine Furchspitze (26) umfasst, die geeignet ist, ein Gewinde in das zugehörige Bauteil (10) zu furchen, wobei die Furchspitze (26) geeignet ist, ein Gewinde in Beton oder Mauerwerk zu furchen, wobei die Furchspitze (26) einen Kraftantrieb (30) umfasst, mit dem ein Drehmoment zum Einschrauben der Furchspitze (26) in das jeweilige Bauteil auf die Furchspitze (26) übertragbar ist, wobei die Furchspitze (26) als separate Komponente ausgebildet ist, die nicht Teil einer Gewindehülse (20,22) ist.

3. System (18) nach Anspruch 1 oder 2, bei dem das zu armierende Bauteil bzw. eines oder beide der zu fügenden Bauteile (10, 12) aus Beton oder Mauerwerk besteht bzw. bestehen.

4. System (18) nach einem der vorgehenden Ansprüche, bei dem das längliche Spannelement durch eine Schraube (24) oder eine Gewindestange (23) gebildet wird, die mindestens ein Außengewinde (32), insbesondere ein metrisches Außengewinde aufweist, und bei dem mindestens eine der Gewindehülsen (20) oder die Furchspitze (26) ein Innengewinde (28) aufweist, in das die Schraube (24) oder Gewindestange (23) einschraubbar ist,
wobei das mindestens eine Außengewinde (32) vorzugsweise zumindest im Bereich des führenden Endes der Schraube (24) oder Gewindestange ausgebildet ist, und bei dem die Furchspitze (26) oder die erste Gewindehülse (20) das genannte Innengewinde (28) aufweist, und/oder
wobei das Innengewinde (28) vorzugsweise zumindest teilweise in einem führenden Abschnitt der ersten Gewindehülse (20) ausgebildet ist.

5. System (18) nach Anspruch 4, bei dem das längliche Spannelement durch eine Schraube (24) mit einem Kopf (34) gebildet wird, der geeignet ist, an einem nachlaufenden Ende der zweiten Gewindehülse (22) oder an dem zu armierendem Bauteil bzw. dem zweiten Bauteil (12) direkt oder über ein dazwischenliegendes Element anzugreifen, um infolge des Einschraubens des mindestens einen Außengewindes (32) der Schraube (24) in das mindestens eine Innengewinde (28) der ersten Gewindehülse (20) oder der Furchspitze (26) die zweite Gewindehülse (22) in Richtung auf die erste Gewindehülse (20) zu spannen bzw.
die erste Gewindehülse (20) mit dem zu armierendem Bauteil bzw. dem zweiten Bauteil (12) axial zu verspannen, oder
bei dem das längliche Spannelement durch eine Gewindestange (23) gebildet wird und das System weiterhin eine Mutter (25) umfasst, die an einem nachlaufenden Ende der Gewindestange (23) auf diese aufschraubbar ist, um an einem nachlaufenden Ende der zweiten Gewindehülse (22) oder an dem zu armierendem Bauteil bzw. dem zweiten Bauteil (12) direkt oder über ein dazwischenliegendes Element anzugreifen und die zweite Gewindehülse (22) in Richtung auf die erste Gewindehülse (20) zu spannen bzw. die erste Gewindehülse (20) mit dem zu armierendem Bauteil bzw. dem zweiten Bauteil (12) axial zu verspannen, und/oder
wobei die erste Gewindehülse (20) ein erstes Innengewinde und die zweite Gewindehülse ein zweites Innengewinde aufweist,
wobei die Schraube (24) oder Gewindestange (23) ein erstes und ein zweites Außengewinde aufweist, die geeignet bemessen sind, um in das erste bzw. zweite Innengewinde eingeschraubt zu werden,
wobei der Innendurchmesser des zweiten Innengewindes größer ist als der Innendurchmesser des ersten Innengewindes, und wobei die Steigung des ersten Innengewindes von der Steigung des zweiten Innengewindes verschieden ist, und insbesondere größer als die Steigung des zweiten Innengewindes ist.

6. System (18) nach einem der vorhergehenden Ansprüche, das ferner ein elastisches Element (27), insbesondere eine Zugfeder oder eine Druckfeder aufweist, welches durch Betätigung des Spannelementes (24) vorgespannt werden kann und so mit der ersten Gewindehülse (20), der zweiten Gewindehülse (22) bzw. dem zweiten Bauteil (12)/zu armierendem Bauteil und dem Spannelement (24) in Wirkverbindung steht, dass die Vorspannung des elastischen Elementes zur axialen Verspannung der beiden Gewindehülsen (20, 22) bzw. zur axialen Verspannung der ersten Gewindehülse (20) mit dem zweiten Bauteil (12)/dem zu armierendem Bauteil beiträgt oder diese bewirkt,
wobei das elastische Element vorzugsweise durch eine Druckfeder (27) gebildet wird, die geeignet ist, zwischen dem Kopf (34) der Schraube (24) bzw. der Mutter (25) und dem nachlaufenden Ende der zweiten Gewindehülse (22) bzw. der dem ersten Bauteil (10) abgewandten Seite des zweiten Bauteils (12) angeordnet zu werden.

7. System (18) nach einem der vorhergehenden Ansprüche, bei dem die erste und/oder die zweite Gewindehülse (20, 22) oder die Furchspitze (26) aus einem gezogenen Rohr mit Innenprofil (30) besteht, auf bzw. in dem das Außengewinde (31) und/oder ein Innengewinde (28) durch Umformung oder spanend, insbesondere durch Wälzschälen ausgebildet ist, und/oder
bei dem die erste und/oder die zweite Gewindehülse (20, 22) gewickelt ist.

8. Verfahren zum Armieren eines Bauteils unter Verwendung eines Systems (18) nach einem der Ansprüche 1 oder 3 bis 7, falls abhängig von Anspruch 1, mit den folgenden Schritten:
Bohren eines Bohrloches (16) in das zu armierende Bauteil,
Einschrauben der ersten Gewindehülse (20) in das Bohrloch (16), sodass diese eine erste Position in dem Bauteil einnimmt,
Einschrauben der zweiten Gewindehülse (22) in das Bohrloch (16), sodass diese eine zweite Position in dem Bauteil einnimmt, die von der ersten Position beabstandet ist,
Einführen des länglichen Spannelementes (24) durch die zweite Gewindehülse (22) hindurch und in oder durch die erste Gewindehülse (20) und axiales Verspannen der ersten und der zweiten Gewindehülse (20, 22) derart, dass die erste und die zweite Gewindehülse (20, 22) gegensinnige Verbundspannungen in dem jeweiligen Bauteil bilden.

9. Verfahren nach Anspruch 8, bei dem
- das längliche Spannelement (24) durch die zweite Gewindehülse (22) hindurch und in oder durch die erste Gewindehülse (20) geführt wird, nachdem die erste und die zweite Gewindehülse (20, 22) in das Bohrloch (16) eingeschraubt wurden, und mit einem führenden Ende an der ersten Gewindehülse (20) festgelegt wird, oder
- das längliche Spannelement (24) zuerst in das Bohrloch (16) eingeführt wird, und das längliche Spannelement (24) durch die erste und die zweite Gewindehülse (20, 22) geführt wird, indem die erste und die zweite Gewindehülse (20,22) auf das längliche Spannelement (24) aufgefädelt und in das Bohrloch (16) geschraubt werden, wobei ein führendes Ende des länglichen Spannelements (24) an der ersten Gewindehülse (20) festgelegt wird, indem die erste Gewindehülse (20) an einem Anschlagselement am führenden Ende des länglichen Spannelements (24), insbesondere einem Schraubenkopf (34) oder einer Mutter (25) anstößt.

10. Verfahren zum Armieren einer Betondecke unter Verwendung eines Systems (18) nach einem der Ansprüche 2 bis 7, mit den folgenden Schritten:
Bohren eines Bohrloches (16) in das zu armierende Bauteil,
Furchen eines Gewindes in dem Bohrloch mithilfe einer Furchspitze (26), die einen Kraftantrieb (30) umfasst, auf den beim Einschrauben der Furchspitze (26) ein Drehmoment übertragen wird,
Einschrauben der ersten Gewindehülse (20) in das Bohrloch (16), sodass diese eine erste Position in dem Bauteil einnimmt,
Einführen des länglichen Spannelementes (24) in das Bohrloch (16) vor oder nach dem Einschrauben der ersten Gewindehülse (20), Festlegen eines führenden Endes des länglichen Spannelementes (24) an der ersten Gewindehülse und axiales Verspannen der ersten Gewindehülse (20) mit dem Bauteil derart, dass die erste Gewindehülse (20, 22) in Richtung auf den Eingang des Bohrloches (16) gespannt wird,
wobei die Armierung in der Nähe von tragenden Säulen, Wänden, Unterzügen oder Auflagern der Betondecke durchgeführt wird.

11. Verfahren nach Anspruch 8 oder 9, bei dem das Bauteil ein Betonbauteil, insbesondere eine Betondecke ist,
wobei die Armierung vorzugsweise in der Nähe von tragenden Säulen, Wänden, Unterzügen oder Auflagern der Betondecke durchgeführt wird, und/oder
bei dem die Höhe der Verbundspannung auf einen vorbestimmten Wert eingestellt wird, insbesondere durch Anwenden eines vorbestimmten Einschraub-Drehmoments einer das längliche Spannelement bildenden Schraube (24), oder durch kontrollierte Vorspannung des genannten elastischen Elementes (27),
wobei die Höhe der Verbundspannung vorzugsweise nach der Einbringung der Armierung kontrolliert, und gegebenenfalls nachgestellt wird, insbesondere in regelmäßigen Wartungsintervallen, und/oder
bei dem das längliche Spannelement (24) an seinem führenden Ende ein Anschlagselement, insbesondere einen Schraubenkopf (34) oder eine aufgeschraubte Mutter (25) hat, bei dem das längliche Spannelement (24) zuerst in das Bohrloch (16) eingeführt wird und die erste Gewindehülse (20) auf das längliche Spannelement (24) aufgefädelt und in das Bohrloch (16) geschraubt wird, und bei dem das führende Ende des länglichen Spannelements (24) an der ersten Gewindehülse (20) festgelegt wird, indem die erste Gewindehülse (20) an dem Anschlagselement am führenden Ende des länglichen Spannelements (24) anstößt.

12. Verfahren zum Fügen eines ersten und eines zweiten Bauteils (10, 12) aus Beton unter Verwendung eines Systems (18) nach einem der Ansprüche 1 oder 3 bis 7, falls abhängig von Anspruch 1, mit den folgenden Schritten:
Bohren eines Bohrloches (16) in das erste und das zweite Bauteil (10, 12),
Einschrauben der ersten Gewindehülse (20) in das Bohrloch (16), sodass diese eine Position im ersten Bauteil (10) einnimmt,
Einschrauben der zweiten Gewindehülse (22) in das Bohrloch (16), sodass diese eine Position im zweiten Bauteil (12) einnimmt, die von der ersten Position beabstandet ist,
Einführen des länglichen Spannelementes (24) durch die zweite Gewindehülse (22) hindurch und in oder durch die erste Gewindehülse (20) und axiales Verspannen der ersten und der zweiten Gewindehülse (20, 22) derart, dass die erste und die zweite Gewindehülse (20, 22) gegensinnige Verbundspannungen in dem jeweiligen Bauteil bilden.

13. Verfahren nach Anspruch 12, bei dem
- das längliche Spannelement (24) durch die zweite Gewindehülse (22) hindurch und in oder durch die erste Gewindehülse (20) geführt wird, nachdem die erste und die zweite Gewindehülse (20, 22) in das Bohrloch (16) eingeschraubt wurden, und mit einem führenden Ende an der ersten Gewindehülse (20) festgelegt wird, oder
- das längliche Spannelement 24 zuerst in das Bohrloch (16) eingeführt wird, und das längliche Spannelement (24) durch die erste und die zweite Gewindehülse (20, 22) geführt wird, indem die erste und die zweite Gewindehülse (20,22) auf das längliche Spannelement (24) aufgefädelt und in das Bohrloch (16) geschraubt werden, wobei ein führendes Ende des länglichen Spannelements (24) an der ersten Gewindehülse (20) festgelegt wird, indem die erste Gewindehülse (20) an einem Anschlagselement am führenden Ende des länglichen Spannelements (24), insbesondere einem Schraubenkopf (34) oder einer Mutter (25) anstößt, und/oder
- wobei das Bohrloch (16) vorzugsweise unter einem Winkel von zwischen 20° und 80°, vorzugsweise zwischen 30° und 75° zur Trennfuge (14) zwischen dem ersten und dem zweiten Bauteil (10, 12) angeordnet ist.

14. Verfahren zum Fügen eines ersten und eines zweiten Bauteils (10, 12) aus Beton unter Verwendung eines Systems (18) nach einem der Ansprüche 2 bis 7, mit den folgenden Schritten:
Bohren eines Bohrloches (16) in das erste und das zweite Bauteil (10, 12),
Furchen eines Gewindes in dem Bohrloch mithilfe einer Furchspitze (26), die einen Kraftantrieb (30) umfasst, auf den beim Einschrauben der Furchspitze (26) ein Drehmoment übertragen wird,
Einschrauben der ersten Gewindehülse (20) in das Bohrloch (16), sodass diese eine Position im ersten Bauteil (10) einnimmt,
Einführen des länglichen Spannelementes (24) in das Bohrloch (16) vor oder nach dem Einschrauben der ersten Gewindehülse (20), Festlegen eines führenden Endes des länglichen Spannelementes (24) an der ersten Gewindehülse (20) und axiales Verspannen der ersten Gewindehülse (20) mit dem zweiten Bauteil (12).

15. Verfahren nach Anspruch 14, bei dem das längliche Spannelement (24) an seinem führenden Ende ein Anschlagselement, insbesondere einen Schraubenkopf (34) oder eine aufgeschraubte Mutter (25) hat, bei dem das längliche Spannelement (24) zuerst in das Bohrloch (16) eingeführt wird und die erste Gewindehülse (20) auf das längliche Spannelement (24) aufgefädelt und in das Bohrloch (16) geschraubt wird, und bei dem das führende Ende des länglichen Spannelements (24) an der ersten Gewindehülse (20) festgelegt wird, indem die erste Gewindehülse (20) an dem Anschlagselement am führenden Ende des länglichen Spannelements (24) anstößt,
wobei das Bohrloch (16) vorzugsweise unter einem Winkel von zwischen 20° und 80°, vorzugsweise zwischen 30° und 75° zur Trennfuge (14) zwischen dem ersten und dem zweiten Bauteil (10, 12) angeordnet ist.

## Claims

1. A system (18) for joining two components (10, 12) or for reinforcing a component, which comprises a first and a second threaded sleeve (20, 22), which each comprise the following:
- an external thread (31), with the aid of which the threaded sleeve (20, 22) can be screwed into the respective component (10, 12) and which is suitable for forming a bond with the respective component (10, 12), and
- a power drive, by means of which a torque for screwing the threaded sleeve (20, 22) into the respective component can be transmitted to the threaded sleeve, wherein the system (18) further comprises an elongate clamping element (24), which is suitable for being guided through the second threaded sleeve (22) and for being inserted into or guided through the first threaded sleeve (20) and which is suitable for axially clamping the first and the second threaded sleeve (20, 22) in such a manner that the first and the second threaded sleeve (20, 22) generate opposed bond stresses in the respective component (10, 12), wherein the system further comprises a grooving tip (26), which is suitable for grooving a thread into the corresponding component (10), wherein the grooving tip (26) comprises a power drive (30), by means of which a torque for screwing the grooving tip (26) into the respective component can be transmitted to the grooving tip (26), wherein the grooving tip (26) is formed as a separate component that is not part of a threaded sleeve (20, 22).

2. A system (18) for joining two components (10, 12) or for reinforcing a component, which comprises a first threaded sleeve (20), which comprises the following:
- an external thread (31), with the aid of which the threaded sleeve (20) can be screwed into the first component (10) and which is suitable for forming a bond with the first component (10), and
- a power drive, by means of which a torque for screwing the threaded sleeve (20) into the first component (10) can be transmitted to the threaded sleeve (20),
wherein the system (18) further comprises an elongate clamping element (24), which is suitable for being guided through a borehole (16) in the component to be reinforced or in the second component (12) of the two components (10, 12) to be joined, respectively, and to be inserted into or guided through the first threaded sleeve (20) and which is suitable for axially clamping the first threaded sleeve (20) with the component to be reinforced or with the second component (12) of two components (10, 12) to be joined, respectively, wherein the system further comprises a grooving tip (26), which is suitable for grooving a thread into the corresponding component (10), wherein the grooving tip (26) comprises a power drive (30), by means of which a torque for screwing the grooving tip (26) into the respective component can be transmitted to the grooving tip (26), wherein the grooving tip (26) is formed as a separate component that is not part of a threaded sleeve (20, 22).

3. The system (18) according to claim 1 or 2,
in which the component to be reinforced, or one or both of the components (10, 12) to be joined, consists or consist, respectively, of concrete or masonryl.

4. The system (18) according to one of the preceding claims, in which the elongate clamping element is formed by a screw (24) or a threaded rod (23), which has at least one external thread (32), in particular a metric external thread, and in which at least one of the threaded sleeves (20) or the grooving tip (26) has an internal thread (28), into which the screw (24) or threaded rod (23) can be screwed,
wherein the at least one external thread (32) preferably is formed at least in the region of the leading end of the screw (24) or threaded rod, and in which the grooving tip (26) or the first threaded sleeve (20) has the aforementioned internal thread (28), and/or wherein the internal thread (28) preferably is at least partially formed in a leading section of the first threaded sleeve (20).

5. The system (18) according to claim 4, in which the elongate clamping element is formed by a screw (24) comprising a head (34), which is suitable for engaging directly or via an intermediate element with a trailing end of the second threaded sleeve (22) or with the second component (12), in order to clamp, as a result of the at least one external thread (32) of the screw (24) being screwed into the at least one internal thread (28) of the first threaded sleeve (20) or of the grooving tip (26), the second threaded sleeve (22) in the direction of the first threaded sleeve (20) or axially clamp the first threaded sleeve (20) with the component to be reinforced or with the second component (12) internal thread, or
in which the elongate clamping element is formed by a threaded rod (23) and the system furthermore comprises a nut (25), which, on a trailing end of the threaded rod (23), can be screwed onto the latter, in order to engage directly or via an intermediate element with a trailing end of the second threaded sleeve (22) or with the component to be reinforced or with the second component (12), respectively, and clamp the second threaded sleeve (22) in the direction of the first threaded sleeve (20) or axially clamp the first threaded sleeve (20) with the component to be reinforced, or with the second component (12), respectively, and/or
wherein the first threaded sleeve (20) has a first internal thread and the second threaded sleeve has a second internal thread,
wherein the screw (24) or threaded rod (23) has a first and a second external thread, which are suitably dimensioned in order to be screwed into the first or second internal thread, respectively,
wherein the inner diameter of the second internal thread is larger than the inner diameter of the first internal thread, and wherein the pitch of the first internal thread differs from the pitch of the second internal thread, and in particular is larger than the pitch of the second internal thread.

6. The system (18) according to one of the preceding claims, which furthermore has an elastic element (27), in particular a tension spring or a compression spring, which can be preloaded by actuating the clamping element (24) and which is operatively coupled with the first threaded sleeve (20), the second threaded sleeve (22) or the second component (i2)/component to be reinforced, and the clamping element (24) in such a manner that the preloading of the elastic element contributes to or effects the axial clamping of the two threaded sleeves (20, 22) or to the axial clamping of the first threaded sleeve (20), with the second component (i2)/the component to be reinforced,
wherein the elastic element preferably is formed by a compression spring (27), which is suitable to be arranged between the head (34) of the screw (24) or the nut (25), and the trailing end of the second threaded sleeve (22) or the side of the second component (12) facing away from the first component (10), respectively.

7. The system (18) according to one of the preceding claims, in which the first and/or the second threaded sleeve (20, 22) or the grooving tip (26) consists of a drawn tube comprising an inner profile (30), on or in which, respectively, the external thread (31) and/or an internal thread (28) is formed by means of forming or machining, in particular by means of hob peeling, and/or
in which the first and/or the second threaded sleeve (20, 22) is wound.

8. A method for reinforcing a component using a system (18) according to one of claims 1 or 3 to 7, if dependent on claim 1, comprising the following steps:
drilling a borehole (16) into the component to be reinforced,
screwing the first threaded sleeve (20) into the borehole (16), so that the said first threaded sleeve assumes a first position in the component,
screwing the second threaded sleeve (22) into the borehole (16), so that the said second threaded sleeve assumes a second position in the component, which is at a distance from the first position,
inserting the elongate clamping element (24) through the second threaded sleeve (22) and into or through the first threaded sleeve (20), and axial clamping of the first and of the second threaded sleeve (20, 22) in such a manner that the first and the second threaded sleeve (20, 22) generate opposed bond stresses in the respective component.

9. The method according to claim 8, in which
- the elongate clamping element (24) is guided through the second threaded sleeve (22) and into or through the first threaded sleeve (20), after the first and the second threaded sleeve (20, 22) have been screwed into the borehole (16), and is secured with a leading end to the first threaded sleeve (20), or
- the elongate clamping element (24) is first inserted into the borehole (16), and the elongate clamping element (24) is fed through the first and the second threaded sleeve (20, 22), in that the first and the second threaded sleeve (20, 22) are threaded onto the elongate clamping element (24) and are screwed into the borehole (16), wherein a leading end of the elongate clamping element (24) is secured to the first threaded sleeve (20), by having the first threaded sleeve (20) abut against a stop element on the leading end of the elongate clamping element (24), in particular a screw head (34) or a nut (25).

10. A method for reinforcing a concrete ceiling using a system (18) according to one of the claims 2 to 7, comprising the following steps:
drilling a borehole (16) into the component to be reinforced,
grooving a thread in the borehole using a grooving tip (26) which comprises a power drive (30), to which during screwing in of the grooving tip (26) a torque is applied,
screwing the first threaded sleeve (20) into the borehole (16), so that the said first threaded sleeve assumes a first position in the component,
inserting the elongate clamping element (24) into the borehole (16) before or after the first threaded sleeve (20) is screwed in, securing a leading end of the elongate clamping element (24) to the first threaded sleeve, and axial clamping of the first threaded sleeve (20) with the component in such a manner that the first threaded sleeve (20, 22) is preloaded in the direction of the entrance to the borehole (16),
wherein the reinforcing is carried out in the vicinity of load-bearing columns, walls, beams or supports of the concrete ceiling.

11. The method according to claim 8 or 9, in which the component is a concrete component, in particular a concrete ceiling,
wherein the reinforcement preferably is executed in the vicinity of load-bearing columns, walls, beams or supports of the concrete ceiling, and/or
in which the level of the bond stress is set to a predetermined value, in particular by using a predetermined screw-in torque of a screw (24), which forms the elongate clamping element, or by controlled preloading of said elastic element (27),
wherein the level of the bond stress preferably is controlled after the introduction of the reinforcement and is readjusted, if applicable, in particular at regular maintenance intervals, and/or
in which the elongate clamping element (24) has, on its leading end, a stop element, in particular a screw head (34) or a nut (25), which is screwed on, wherein the elongate clamping element (24) is first inserted into the borehole (16) and the first threaded sleeve (20) is threaded onto the elongate clamping element (24) and is screwed into the borehole (16), and in which the leading end of the elongate clamping element (24) is secured to the first threaded sleeve (20), by having the first threaded sleeve (20) abut against the stop element on the leading end of the elongate clamping element (24).

12. A method for joining a first and a second component (10, 12) made from concrete using a system (18) according to one of the claims 1 or 3 to 7, if dependent from claim 1, comprising the following steps:
drilling a borehole (16) into the first and the second component (10, 12),
screwing the first threaded sleeve (20) into the borehole (16), so that the said first threaded sleeve assumes a position in the first component (10),
screwing the second threaded sleeve (22) into the borehole (16), so that the said second threaded sleeve assumes a position in the second component (12), which is spaced apart from the first position,
inserting the elongate clamping element (24) through the second threaded sleeve (22) and into or through the first threaded sleeve (20), and axial clamping of the first and of the second threaded sleeve (20, 22) in such a manner that the first and the second threaded sleeve (20, 22) generate opposed bond stresses in the respective component.

13. The method according to claim 12, in which
- the elongate clamping element (24) is guided through the second threaded sleeve (22) and into or through the first threaded sleeve (20), after the first and the second threaded sleeve (20, 22) have been screwed into the borehole (16), and is secured with a leading end to the first threaded sleeve (20), or
- the elongate clamping element (24) is first inserted into the borehole (16), and the elongate clamping element (24) is guided through the first and the second threaded sleeve (20, 22), by threading the first and the second threaded sleeve (20, 22) onto the elongate clamping element (24) and screwing them into the borehole (16), wherein a leading end of the elongate clamping element (24) is secured to the first threaded sleeve (20), by having the first threaded sleeve (20) abut against a stop element on the leading end of the elongate clamping element (24), in particular a screw head (34) or a nut (25), and/or
- wherein the borehole (16) is preferably arranged at an angle of between 20° and 80°, preferably between 30° and 75° to the parting line (14) between the first and the second component (10, 12).

14. The method for joining a first and a second component (10, 12) made from concrete using a system (18) according to one of the claims 2 to 7, comprising the following steps:
drilling a borehole (16) into the first and the second component (10, 12),
grooving a thread in the borehole using a grooving tip (26) which comprises a power drive (30), to which during screwing in of the grooving tip (26) a torque is applied,
screwing the first threaded sleeve (20) into the borehole (16), so that the said first threaded sleeve assumes a position in the first component (10),
inserting the elongate clamping element (24) into the borehole (16) before or after the first threaded sleeve (20) is screwed in, securing a leading end of the elongate clamping element (24) to the first threaded sleeve (20), and axial clamping of the first threaded sleeve (20) with the second component (12).

15. The method according to claim 14, in which the elongate clamping element (24) has, on its leading end, a stop element, in particular a screw head (34) or a nut (25), which is screwed on, wherein the elongate clamping element (24) is first inserted into the borehole (16) and the first threaded sleeve (20) is threaded onto the elongate clamping element (24) and is screwed into the borehole (16), and in which the leading end of the elongate clamping element (24) is secured to the first threaded sleeve (20), by having the first threaded sleeve (20) abut against the stop element on the leading end of the elongate clamping element (24),
wherein the borehole (16) is preferably arranged at an angle of between 20° and 80°, preferably between 30° and 75° to the parting line (14) between the first and the second component (10, 12).

## Revendications

1. Système (18) pour l'assemblage de deux pièces (10, 12) ou pour l'armature d'une pièce, qui comprend une première et une deuxième douilles filetées (20, 22) qui comprennent chacune ce qui suit :
- un filetage externe (31) à l'aide duquel la douille filetée (20, 22) peut être visée dans la pièce (10, 12) correspondante, dans lequel la douille filetée (20, 22) est conçue pour former, avec la pièce (10, 12) correspondante, un ensemble et
- un entraînement par force avec lequel un couple peut être transmis à la douille filetée pour le vissage de la douille filetée (20, 22) dans la pièce correspondante,
dans lequel le système (18) comprend en outre un élément de serrage allongé (24) qui est conçu pour être guidé à travers la deuxième douille filetée (22) et inséré dans la première douille filetée (20) ou guidé à travers celle-ci, et qui est conçu pour serrer axialement les première et deuxième douilles filetées (20, 22) de façon à ce que les première et deuxième douilles filetées (20, 22) forment des serrages d'ensemble de sens opposés dans la pièce (10, 12) correspondante, dans lequel le système comprend en outre une pointe de rainurage (26) qui est conçue pour réaliser un filetage dans la pièce (10) correspondante, dans lequel la pointe de rainurage (26) comprend un entraînement par force (30) avec lequel un couple peut être transmis à la pointe de rainurage (26) pour le vissage de la pointe de rainurage (26) dans la pièce correspondante, dans lequel la pointe de rainurage (26) est conçue comme un composant séparé qui ne fait pas partie d'une douille filetée (20, 22).

2. Système (18) pour l'assemblage de deux pièces (10, 12) ou pour l'armature d'une pièce, qui comprend une première douille filetée (20) qui comprend ce qui suit :
- un filetage externe (31) à l'aide duquel la douille filetée (20) peut être visée dans la première pièce (10), dans lequel la douille filetée (20) est conçue pour former, avec la première pièce (10), un ensemble et
- un entraînement par force avec lequel un couple peut être transmis à la douille filetée (20) pour le vissage de la douille filetée (20) dans la première pièce (10),
dans lequel le système (18) comprend en outre un élément de serrage allongé (24) qui est conçu pour être guidé, à travers un alésage (16) dans la pièce à armer respectivement dans la deuxième pièce (12), par les deux pièces à assembler (10, 12) et inséré dans la première douille filetée (20) ou guidé à travers celle-ci, et qui est conçu pour serrer axialement la première douille filetée (20) avec la pièce à armer respectivement avec la deuxième pièce (12), par les deux pièces à assembler (10, 12), dans lequel le système comprend en outre une pointe de rainurage (26) qui est conçue pour réaliser un filetage dans la pièce (10) correspondante, dans lequel la pointe de rainurage (26) est conçue pour réaliser un filetage dans le béton ou la maçonnerie, dans lequel la pointe rainurage (26) comprend un entraînement par force (30) avec lequel un couple peut être transmis à la pointe de rainurage (26) pour le vissage de la pointe de rainurage (26) dans la pièce correspondante, dans lequel la pointe de rainurage (26) est conçue comme un composant séparé qui ne fait pas partie d'une douille filetée (20, 22).

3. Système (18) selon la revendication 1 ou 2, dans lequel la pièce à armer respectivement une ou les deux pièces à assembler (10, 12) sont constituées de béton ou de maçonnerie.

4. Système (18) selon l'une des revendications précédentes, dans lequel l'élément de serrage allongé est constitué d'une vis (24) ou d'une tige filetée (23), qui comprend au moins un filetage externe (32), plus particulièrement filetage externe métrique, et dans lequel au moins une des douilles filetées (20) ou la pointe de rainurage (26) comprend un filetage interne (28) dans lequel la vis (24) ou la tige filetée (23) peut être vissée,
dans lequel l'au moins un filetage externe (32) est réalisé de préférence au moins au niveau de l'extrémité de guidage de la vis (24) de la tige filetée et dans lequel la pointe de rainurage (26) ou la première douille filetée (20) présente le filetage interne (28) mentionné et/ou
dans lequel le filetage interne (28) est réalisé de préférence au moins partiellement dans une portion de guidage de la première douille filetée (20).

5. Système (18) selon la revendication 4, dans lequel l'élément de serrage allongé est constitué d'une vis (24) avec une tête (34) qui est conçue pour s'emboîter, au niveau d'une extrémité arrière de la deuxième douille filetée (22) ou au niveau de la pièce à armer respectivement de la deuxième pièce (12), directement ou par l'intermédiaire d'un élément intercalé entre eux, afin de serrer, à la suite du vissage de l'au moins un filetage externe (32) de la vis (24) dans l'au moins un filetage interne (28) de la première douille filetée (20) de la la pointe de rainurage (26), la deuxième douille filetée (22) en direction de la première douille filetée (20) respectivement de serrer axialement la première douille filetée (20) avec la pièce à armer respectivement la deuxième pièce (12) ou dans lequel l'élément de serrage allongé est constitué d'une tige filetée (23) et le système comprend en outre un écrou (25) qui peut être vissé sur celle-ci au niveau d'une extrémité arrière de la deuxième douille filetée (22) afin de s'emboîter au niveau d'une extrémité arrière de la deuxième douille filetée (22) ou au niveau de la pièce à armer respectivement la deuxième pièce (12) directement ou par l'intermédiaire d'un élément intercalé entre eux et de serrer la deuxième douille filetée (22) en direction de la première douille filetée (20) respectivement serrer axialement la première douille filetée (20) avec la pièce à armer respectivement la deuxième pièce (12) et/ou
dans lequel la première douille filetée (20) comprend un premier filetage interne et la deuxième douille filetée comprend un deuxième filetage interne,
dans lequel la vis (24) ou la tige filetée (23) comprend un premier et un deuxième filetages externes, qui sont dimensionnés de façon à pouvoir se visser dans le premier respectivement le deuxième filetage interne,
dans lequel le diamètre interne du deuxième filetage interne est supérieure au diamètre interne du premier filetage interne et dans lequel le pas du premier filetage interne est différent du pas du deuxième filetage interne et plus particulièrement supérieur au pas du deuxième filetage interne.

6. Système (18) selon l'une des revendications précédentes, qui comprend en outre un élément élastique (27), plus particulièrement un ressort de traction ou un ressort de compression, qui peut être précontraint par l'actionnement de l'élément de serrage (24) et qui est en liaison fonctionnelle avec la première douille filetée (20), la deuxième douille filetée (22) respectivement la deuxième pièce (12) / la pièce à armer et l'élément de serrage (24) de façon à ce que la précontrainte de l'élément élastique contribue ou provoque le serrage axial des deux douilles filetées (20, 22) ou le serrage axial de la première douille filetée (20) avec la deuxième pièce (12) / la pièce à armer,
dans lequel l'élément élastique est constitué de préférence d'un ressort de compression (27) qui est conçu pour être disposé entre la tête (34) de la vis (24) respectivement l'écrou (25) et l'extrémité arrière de la deuxième douille filetée (22) respectivement du côté de la deuxième pièce (12) opposé à la première pièce (10).

7. Système (18) selon l'une des revendications précédentes, dans lequel la première et/ou la deuxième douille filetée (20, 22) ou la pointe de rainurage (26) est constitué d'un tube étiré avec un profil interne (30), sur lequel respectivement dans lequel le filetage externe (31) et/ou un filetage interne (28) est réalisé par déformation ou par enlèvement de copeaux, plus particulièrement par décolletage et/ou
dans lequel la première et/ou la deuxième douille filetée (20, 22) est enroulée.

8. Procédé d'armature d'une pièce à l'aide d'un système (18) selon l'une des revendications 1 ou 3 à 7, si dépendante de la revendication 1, avec les étapes suivantes :
perçage d'un trou (16) dans la pièce à armer,
vissage de la première douille filetée (20) dans le trou (16), de façon à ce qu'elle prenne une première position dans la pièce,
vissage de la deuxième douille filetée (22) dans le trou (16), de façon à ce qu'elle prenne une deuxième position dans la pièce, qui est distante de la première position,
introduction de l'élément de serrage allongé (24) à travers la deuxième douille filetée (22) et dans ou à travers la première douille filetée (20) et serrage axial des première et deuxième douilles filetées (20, 22) de façon à ce que les première et deuxième douilles filetées (20,22) forment, dans la pièce correspondante, des serrages de sens opposés.

9. Procédé selon la revendication 8, dans lequel
- l'élément de serrage allongé (24) est guidé à travers la deuxième douille filetée (22) et dans ou à travers la première douille filetée (20), une fois que les première et deuxième douilles filetées (20, 22) ont été vissées dans le trou (16), et est fixé avec une extrémité de guidage à la première douille filetée (20) ou
- l'élément de serrage allongé (24) est d'abord introduit dans le trou (16) et l'élément de serrage allongé (24) est guidé à travers les première et deuxième douille filetées (20, 22) en enfilant les première et deuxième douilles filetées (20, 22) sur l'élément de serrage allongé (24) et en le vissant dans le trou (16), dans lequel une extrémité de guidage de l'élément de serrage allongé (24) est fixée à la première douille filetée (20), en poussant la première douille filetée (20) contre un élément de butée au niveau de l'extrémité de guidage de l'élément de serrage allongé (24), plus particulièrement une tête de vis (34) ou un écrou (25).

10. Procédé pour l'armature d'une dalle de béton à l'aide d'un système (18) selon l'une des revendications 2 à 7, avec les étapes suivantes :
perçage d'un trou (16) dans la pièce à armer,
réalisation d'un filetage dans le trou à l'aide d'une pointe de rainurage (26) qui comprend un entraînement par force (30) auquel est transmis un couple lors du vissage de la pointe de rainurage (26),
vissage de la première douille filetée (20) dans le trou (16), de façon à ce qu'elle prenne une première position dans la pièce,
introduction de l'élément de serrage allongé (24) dans le trou (16) avant ou après le vissage de la première douille filetée (20), fixation d'une extrémité de guidage de l'élément de serrage allongé (24) à la première douille filetée et serrage axial de la première douille filetée (20) avec la pièce de façon à ce que la première douille filetée (20, 22) soit serrée en direction de l'entrée du trou (16),
dans lequel l'armature est effectuée à proximité de colonnes, de parois, de solives ou d'appui porteurs de la dalle de béton.

11. Procédé selon la revendication 8 ou 9, dans lequel la pièce est une pièce en béton, plus particulièrement une dalle en béton,
dans lequel l'armature est effectuée de préférence à proximité de colonnes, de parois, de solives ou d'appui porteurs de la dalle de béton et/ou
dans lequel la valeur du serrage de l'ensemble est réglée à une valeur prédéterminée, plus particulièrement en appliquant un couple de vissage prédéterminé d'une vis (24) constituant l'élément de serrage allongé ou par une précontrainte contrôlée de l'élément élastique (27) mentionné,
dans lequel la valeur du serrage de l'ensemble est contrôlée et, le cas échéant corrigée, après la réalisation de l'armature, plus particulièrement à des intervalles de maintenance réguliers et/ou
dans lequel l'élément de serrage allongé (24) comprend, au niveau de son extrémité de guidage, un élément de butée, plus particulièrement une tête de vis (34) ou un écrou vissé (25), dans lequel l'élément de serrage allongé (24) est d'abord introduit dans le trou (16) et la première douille filetée (20) est enfilée sur l'élément de serrage allongé (24) et vissée dans le trou (16) et dans lequel l'extrémité de guidage de l'élément de serrage allongé (24) est fixée à la première douille filetée (20) en poussant la première douille filetée (20) contre l'élément de butée au niveau de l'extrémité de guidage de l'élément de serrage allongé (24).

12. Procédé d'assemblage d'une première et d'une deuxième pièces (10, 12) en béton à l'aide d'un système (18) selon l'une des revendications 1 ou 3 à 7, si dépendante de la revendication 1, dans les étapes suivantes :
perçage d'un trou (16) dans les première et deuxième pièces (10, 12),
vissage de la première douille filetée (20) dans le trou (16), de façon à ce qu'elle prenne une position dans la première pièce (10),
vissage de la deuxième douille filetée (22) dans le trou (16), de façon à ce qu'elle prenne, dans la deuxième pièce (12), une position distante de la première position,
introduction de l'élément de serrage allongé (24) à travers la deuxième douille filetée (22) et dans ou à travers la première douille filetée (20) et serrage axial des première et deuxième douilles filetées (20, 22) de façon à ce que les première et deuxième douilles filetées (20, 22) forment des serrages d'ensemble de sens opposés dans la pièce correspondante.

13. Procédé selon la revendication 12, dans lequel
- l'élément de serrage allongé (24) est guidé à travers la deuxième douille filetée (22) et dans ou à travers la première douille filetée (20) une fois que les première et deuxième douilles filetées (20, 22) ont été vissées dans le trou (16) et est fixé avec une extrémité de guidage à la première douille filetée (20) ou
- l'élément de serrage allongé (24) est d'abord introduit dans le trou (16) et l'élément de serrage allongé (24) est guidé à travers les première et deuxième douille filetées (20, 22) en enfilant les première et deuxième douilles filetées (20, 22) sur l'élément de serrage allongé (24) et en le vissant dans le trou (16), dans lequel une extrémité de guidage de l'élément de serrage allongé (24) est fixée à la première douille filetée (20), en poussant la première douille filetée (20) contre un élément de butée au niveau de l'extrémité de guidage de l'élément de serrage allongé (24), plus particulièrement une tête de vis (34) ou un écrou (25) et/ou
- le trou (16) est disposé avec un angle entre 20° et 80°, de préférence entre 30° et 75° par rapport au joint de séparation (14) entre les première et deuxième pièces (10, 12).

14. Procédé d'assemblage d'une première et d'une deuxième pièces (10, 12) en béton à l'aide d'un système (18) selon l'une des revendications 2 à 7, avec les étapes suivantes :
perçage d'un trou (16) dans les première et deuxième pièces (10, 12),
réalisation d'un filetage dans le trou à l'aide d'une pointe de rainurage (26), qui comprend un entraînement par force (30) auquel est transmis un couple lors du vissage de la pointe de rainurage (26),
vissage de la première douille filetée (20) dans le trou (16) de façon à ce qu'elle prenne une position dans la première pièce (10),
introduction de l'élément de serrage allongé (24) dans le trou (16) avant ou après le vissage de la première douille filetée (20), fixation d'une extrémité de guidage de l'élément de serrage allongé (24) à la première douille filetée (20) et serrage axial de la première douille filetée (20) avec la deuxième pièce (12).

15. Procédé selon la revendication 14, dans lequel l'élément de serrage allongé (24) comprend, au niveau de son extrémité de guidage, un élément de butée, plus particulièrement une tête de vis (34) ou un écrou vissé (25), dans lequel l'élément de serrage allongé (24) est d'abord introduit dans le trou (16) et la première douille filetée (20) est enfilée sur l'élément de serrage allongé (24) et vissée dans le trou (16) et dans lequel l'extrémité de guidage de l'élément de serrage allongé (24) est fixée à la première douille filetée (20) en poussant la première douille filetée (20) contre l'élément de butée au niveau de l'extrémité de guidage de l'élément de serrage allongé (24),
dans lequel le trou (16) est disposé avec un angle entre 20° et 80°, de préférence entre 30° et 75° par rapport au joint de séparation (14) entre les première et deuxième pièces (10, 12).
